# EUROPÄISCHE PATENTANMELDUNG

(11) **EP 4 838 092 A1**
(43) Veröffentlichungstag der Anmeldung: **11.11.2026**
(21) Anmeldenummer: 26176817.0
(22) Anmeldetag: 06.05.2026
(51) Int. Cl.: F03D 80/70

(54) **SCHMIERSYSTEM FÜR LAGER UND GETRIEBE**

(30) Priorität: 08.05.2025 DE 102025001557
(71) Anmelder: Jelonnek, Helmut, 67677 Enkenbach-Alsenborn (DE)
(72) Erfinder: Jelonnek, Helmut, 67677 Enkenbach-Alsenborn (DE)
(74) Vertreter: WSL Patentanwälte Partnerschaft mbB

(57) **Zusammenfassung**

Die Erfindung betrifft ein Verfahren zum Betreiben eines Schmiersystems für ein Lager und/oder für ein Getriebe einer Windkraftanlage, ein entsprechendes Schmiersystem, eine Windkraftanlage mit einem solchen Schmiersystem und eine Windkraftanlagenanordnung mit wenigstens zwei solchen Windkraftanlagen. Das Verfahren umfasst die Schritte: Ermitteln einer Temperatur T des Lagers oder des Getriebes, Ermitteln eine Umgebungstemperatur T_{U}, Ermitteln einer Drehzahl n des Lagers oder Ermitteln einer übertragenen Leistung P des Getriebes, Bilden eines Quotienten ΔT/Q mit Q = n oder Q = P und mit ΔT = T - T_{U}, und Zuführen eines Schmiermittels aus einem Vorratsspeicher in das Lager oder in das Getriebe in Abhängigkeit von dem ermittelten Quotienten ΔT/Q. Das Schmiersystem umfasst die dazu notwendigen Sensoren und Einrichtungen.

## Beschreibung

Die Erfindung betrifft ein Verfahren zum Betreiben eines Schmiersystems für ein Lager im Antriebsstrang einer Windkraftanlage, insbesondere für ein Hauptwellenlager, und/oder für ein Getriebe einer Windkraftanlage, ein entsprechendes Schmiersystem, eine Windkraftanlage mit einem solchen Schmiersystem und eine Windkraftanlagenanordnung mit wenigstens zwei solchen Windkraftanlagen.

Es geht dabei insbesondere um die Schmierung der Hauptwellenlager, auch als Rotorlager bezeichnet, und/oder, sofern es sich um eine Windkraftanlage mit Getriebe handelt, der Getriebelager sowie des Getriebes selbst.

### Hintergrund der Erfindung

Es ist bekannt, dass Lager und Getriebe von Windkraftanlagen automatisch in konstanten Zeitabständen mit einer fest vorgegebenen Menge eines Schmiermittels aus einem externen Behälter gefettet werden und das verbrauchte Schmiermittel in einem Auffangbehälter gesammelt wird. (Wind Turbine Systems Design Volume 1: Nacelles, drive trains and verification, Edited by Jan Wenske, IET The Institution of Engineering and Technology, ISBN 978-1-78561-856-7, Seite 380 bis 390).

Aus der DE 10 2008 032 016 B4 ist bekannt, den Schädigungsgrad des Öls einer Kupplungseinheit anhand seiner Gesamtverlustarbeit zu bestimmen, die wiederum aus der Drehzahldifferenz zwischen der Eingangs- und der Ausgangswelle und einer empirisch ermittelten Konstante bestimmt wird.

Die DE 10 2018 104 400 A1 befasst sich mit dem Schätzen der Lebensdauer eines Schmiermittels in einem Maschinengetriebe. Auf der Grundlage eines bekannten Reibungskoeffizienten wird ein Reibungswärmewert berechnet. Dieser wird zusammen der elektrischen Wärmeerzeugung der Antriebsmotoren zur Schätzung der Temperatur des Schmiermittels in dem Getriebe und daraus der Lebensdauer des Schmiermittels herangezogen.

Die Patentanmeldung WO 2022/063652 A1 offenbart ein Verfahren zum Bestimmen des Reibungszustands in einem Lager durch Messung einer Übergangsgeschwindigkeit zwischen Misch- und Flüssigkeitsreibung sowie eines elektrischen Widerstands. Daraus werden Größen wie Schmierfilmdicke und Viskosität des Schmierstoffs im Betrieb zum Zweck der Zustandsanalyse und Charakterisierung des Schmierstoffs abgeleitet.

Die Patentschrift DE11 2014 000 352 B4 offenbart ein Verfahren zur Steuerung des Reibungskoeffizienten zwischen einem Reibungspaar, zwischen dem sich ein potentialabhängiges Schmiermittel befindet. Die Steuerung des Reibungskoeffizienten erfolgt durch Steuerung des Potentials zwischen dem Reibungspaar, beispielsweise einer Kupplung.

Die Schrift DE 10 2005 003 252 A1 befasst sich mit einem Modell zur Bestimmung der Restnutzungsdauer eines Getriebeöls, wobei reibungsrelevante Größen wie Schaltvorgänge, Schlupf und Temperatur berücksichtigt werden. Diese Größen wirken als indirekte Repräsentanten von Reibungszuständen und beeinflussen die Bewertung der Ölalterung. Über die ermittelte Ölzustandsgröße wird entschieden, wann ein Ölwechsel erforderlich ist.

Aus der Schrift DE 2016 216 304 A1 ist eine Lagerdiagnoseeinrichtung zur Verwendung in einer Werkzeugmaschine bekannt, die eingerichtet ist, aus einer gemessenen Umdrehungszahl und einer gemessenen Temperatur ein Reibmoment und daraus sowie optional einer geschätzten Schmierölviskosität eine Lagercharakteristik zu bestimmen und nach Vergleich mit einer Referenz gegebenenfalls eine Störung festzustellen.

Der Erfindung liegt das Problem zugrunde, dass speziell in Lagern einer Windkraftanlage nicht der tatsächliche Schmiermittelbedarf berücksichtigt und ein Schaden im Lager bzw. im Getriebe nicht frühzeitig erkannt wird.

### Zusammenfassung der Erfindung

Dieses Problem wird durch ein Verfahren mit den Merkmalen des Patentanspruches 1, ein Schmiersystem mit den Merkmalen des Anspruches 10, eine Windkraftanlage mit den Merkmalen des Anspruches 14 und eine Windkraftanlagenanordnung mit den Merkmalen des Anspruches 15 gelöst.

Das erfindungsgemäße Verfahren zum Betreiben eines Schmiersystems für ein Lager einer Windkraftanlage oder für ein Getriebe einer Windkraftanlage umfasst die Schritte:
- Ermitteln einer Temperatur T des Lagers oder des Getriebes,
- Ermitteln einer Umgebungstemperatur T_{U},
- Ermitteln einer Drehzahl n des Lagers oder Ermitteln einer übertragenen Leistung P des Getriebes,
- Bilden eines Quotienten ΔT/Q mit Q = n oder Q = P und mit ΔT = T - T_{U},
- Zuführen eines Schmiermittels aus einem Vorratsspeicher in das Lager oder in das Getriebe in Abhängigkeit von dem ermittelten Quotienten ΔT/Q.

Q wird hierin auch als "Energiebezugsgröße" bezeichnet und fasst die Drehzahl n des Lagers einerseits und übertragenen Leistung P des Getriebes zusammen. ΔT wird hierin als auch als "Temperaturerhöhung" bezeichnet und berücksichtigt den Einfluss der Umgebungstemperatur T_{U} auf die absolute Lager- bzw. Getriebetemperatur durch Differenzbildung.

Das erfindungsgemäße Schmiersystem für ein Lager einer Windkraftanlage, insbesondere für ein Hauptwellenlager, bzw. für ein Getriebe einer Windkraftanlage weist dementsprechend Sensoren auf, die eingerichtet sind, eine Temperatur T des Lagers oder des Getriebes, eine Umgebungstemperatur T_{U}, eine Drehzahl n des Lagers und/oder eine übertragene Leistung P des Getriebes zu ermitteln. Das erfindungsgemäße Schmiersystem weist ferner einen Vorratsspeicher für das Schmiermittel auf und ist eingerichtet, einen Quotienten ΔT/Q mit Q = n oder Q = P und mit ΔT = T - T_{U}, oder ΔT/P mit ΔT = T - T_{U} zu bilden, und ein Schmiermittel in Abhängigkeit von dem ermittelten Quotienten ΔT/Q aus dem Vorratsspeicher in das Lager oder in das Getriebe zu pumpen.

Der erreichte Vorteil ist, dass das Schmiersystem nur die wirklich benötigte Menge des Schmiermittels benutzt und die Lebensdauer der Lager und Getriebe erhöht. Erhöht sich der Reibungskoeffizient (Roll- und/ oder Gleitreibung), beispielsweise wenn sich in den Lagern bzw. Getrieben Partikel lösen, bei einer WEC (White Etching Cracks)-Bildung, einer Ermüdung, bei Rissen, bei einem Verschleiß, einer Korrosion, einer Fehlausrichtung, einer Überhitzung und bei Getrieben zusätzlich bei Zahnschäden und Zahnbrüchen, dann pumpt das Schmiersystem kontinuierlich Schmiermittel in die betroffenen Lager bzw. Getriebe bis beispielsweise die Partikel ausgeschwemmt sind oder eine Wartung erfolgt ist. Im Fall abgelöster Partikel kann sich sich dieser Schaden von selbst regenerieren.

Ein weiterer Vorteil ist, dass das Schmiersystem von der leicht zu messenden TemperaturerhöhungΔTund der Energiebezugsgröße Q auf den Reibungskoeffizienten (Roll- und/ oder Gleitreibung) schließt.

Eine vorteilhafte Weiterbildung des Verfahrens sieht vor, dass verbrauchtes Schmiermittel aus dem Lager oder Getriebe in einem Auffangbehälter gesammelt wird.

Dementsprechend weist das Schmiersystem vorteilhaft einen Auffangbehälter für verbrauchtes Schmiermittel auf.

Das Verfahren ist vorzugsweise dadurch weitergebildet, dass das Lager oder das Getriebe über eine bestimmte Einlaufzeit betrieben wird und das Ermitteln einer Temperatur T_{Ref} des Lagers oder des Getriebes, das Ermitteln einer Umgebungstemperatur T_{URef}, und das Ermitteln einer Drehzahl n_{Ref} des Lagers oder das Ermitteln einer übertragenen Leistung P_{Ref} des Getriebes als Referenzgrößen in einem bestimmten Ermittlungszeitraum T_{M}, nach der Einlaufzeit erfolgt.

Die Einlaufzeit ist ein Zeitraum ab Inbetriebnahme des Lagers oder des Getriebes, in dem der Reibungskoeffizient in dem Lager oder Getriebe noch abnimmt. Je kürzer die Einlaufzeit ist, desto länger kann der Ermittlungszeitraum festgelegt werden, und desto mehr Werte erhält man für das Verhältnis ΔT/Q. Dies ist statistisch von Vorteil. Wird die Einlaufzeit allerdings zu kurz festgelegt, ermittelt das Schmiersystem anfangs zu hohe Werte für das Verhältnis ΔT/Q, was dazu führt, dass Schäden unentdeckt bleiben. Ein Lager ist typischerweise erst nach einigen Wochen bis zu einigen Monaten eingelaufen und ein Getriebe erst nach einigen Wochen bis zu einigen Monaten. Die Einlaufzeit beträgt daher vorzugsweise zwischen einem Monat und sechs Monaten ab Inbetriebnahme des Lagers oder des Getriebes.

Der Ermittlungszeitraum ist der Zeitraum nach der Einlaufphase, in dem erfahrungsgemäß keine Schäden am Lager oder Getriebe erwartet werden. Je länger der Ermittlungszeitraum ist, desto mehr Werte erhält man für das ΔT/Q-Verhältnis. Dies ist statistisch von Vorteil. Ist der Zeitraum jedoch zu lang, können bereits im Ermittlungszeitraum erste Schäden auftreten sein, was zur Berechnung falscher ΔT/Q-Verhältnisse führt, wodurch wiederum Schäden unentdeckt bleiben. Schäden an den in Rede stehenden Lagern treten typischerweise nach einigen Jahren und an den Getrieben nach sieben bis zehn Jahren auf. Der Ermittlungszeitraum T_{M} beginnt daher vorzugsweise nach wenigstens einem Monat und höchstens sechs Monaten Betriebsdauer und endet vorzugsweise nach wenigstens drei Jahren und höchstens sieben Jahren Betriebsdauer ab Inbetriebnahme des Lagers oder des Getriebes.

Das Verfahren ist vorzugweise dahingehend weitergebildet, dass aus den im Ermittlungszeitraum ermittelten Referenzgrößen Temperatur T_{Ref}, Umgebungstemperatur T_{URef}, Drehzahl n_{Ref} oder Leistung P_{Ref} ein Referenzwert für den Quotienten (ΔT/Q)_{Ref} gebildet wird.

Eine oder mehrere der im Ermittlungszeitraum ermittelten Referenzgrößen Temperatur T_{Ref}, Umgebungstemperatur T_{URef}, Drehzahl n_{Ref} oder Leistung P_{Ref} werden vorzugsweise in einem Datenspeicher gespeichert. Der Referenzwert (ΔT/Q)_{Ref} kann dann entweder später aus den gespeicherten Referenzgrößen oder sofort aus den ermittelten Referenzgrößen gebildet und selbst in dem Datenspeicher gespeichert werden.

Das Schmiersystem weist dementsprechend bevorzugt einen Datenspeicher auf und ist eingerichtet, die im Ermittlungszeitraum ermittelten Referenzgrößen und/oder den Referenzwert (ΔT/Q)_{Ref} zu speichern.

Der erreichte Vorteil ist, dass das Schmiersystem den Soll-Reibungskoeffizienten (Roll- und/ oder Gleitreibung) in dem Ermittlungszeitraum automatisch ermittelt.

Bis zum Ende des Ermittlungszeitraums wird das Schmiermittel aus dem Vorratsspeicher vorzugsweise nach einem vom Windkraftanlagenhersteller oder -betreiber festgelegten Plan in das Lager oder in das Getriebe zugeführt.

Auch nach dem Ermittlungszeitraum werden die Größen Temperatur T, Umgebungstemperatur T_{U}, Drehzahl n oder Leistung P ermittelt und daraus der Quotient ΔT/Q gebildet. Das Schmiermittel wird dann aus dem Vorratsspeicher in das Lager oder in das Getriebe zugeführt, und zwar in Abhängigkeit von einem Vergleich des aus den nach dem Ermittlungszeitraum ermittelten, also "aktuellen" Größen gebildeten Quotienten ΔT/Q mit dem aus den im Ermittlungszeitraum ermittelten Referenzgrößen gebildeten Referenzwert (ΔT/Q)_{Ref}.

Der Vergleich des aktuellen Quotienten ΔT/Q mit dem Referenzwert (ΔT/Q)_{Ref} erfolgt beispielweise durch Bildung des Quotienten (ΔT/Q)/(ΔT/Q)_{Ref}. Anschließend kann der Quotient (ΔT/Q)/(ΔT/Q)_{Ref} mit einem vorgegeben Schwellenwert werden und bei Überschreiten des Schwellenwertes ein Steuersignal zur Ausgabe von Schmiermittel aus dem Vorratsspeicher in das Lager oder in das Getriebe ausgegeben werden.

Befinden sich abgelöste Partikel in den Lagern bzw. Getrieben oder besteht ein sonstiger zuvor genannter Schaden, so nimmt der Schmiermittelvorrat kontinuierlich ab, bis die Partikel ausgeschwemmt sind, eine Wartung erfolgte oder kein Schmiermittel mehr in den zugehörigen Vorratsspeichern enthalten ist.

Gemäß einer vorteilhaften Weiterbildung des Verfahrens wird in einem solchen Fall eine Notwendigkeit einer Wartung des Lagers oder des Getriebes angezeigt, sobald sich nur noch ein bestimmter Anteil P_{V} des Schmiermittels in dem Vorratsspeicher befindet.

Dementsprechend ist das Schmiersystem eingerichtet mittels einer Wartungsanzeige, die Notwendigkeit einer Wartung des Lagers oder des Getriebes anzuzeigen, sobald der Füllstand des Vorratsspeichers unter einen bestimmter Anteil P_{V} des Schmiermittels in dem Vorratsspeicher sinkt.

Hierzu weist das Schmiersystem vorteilhafterweise eine Füllstandsermittlungseinrichtung auf. Diese kann eingerichtet sein, eine direkte Füllstandmessung in dem Vorratsspeicher vorzunehmen oder den Füllstand anhand einer Verbrauchs- oder Flussmessung des Schmiermittels zu berechnen.

Typischerweise sind planmäßige Wartungsintervalle bei Windkraftanlagen so angelegt, dass der erwartete Füllstand des Vorratsspeichers bei störungsfreiem Betrieb zum Zeitpunkt der nächsten Wartung in einem festgelegten Intervall liegt. Beispielsweise beträgt der erwartete Füllstand P_{W} dann wenigstens 30% und höchstens 70% des Speichervolumens.

Der Anteil P_{V} des Schmiermittels in dem Vorratsspeicher, bei dem die Wartungsanzeige, die Notwendigkeit einer Wartung anzeigt, liegt vorzugsweise in einem Bereich von minimal P_{W}/5 bis maximal P_{W}/2. Rechnerisch ergibt sie sich hieraus ein Anteil oder Schwellenwert P_{V} in einem Bereich von 6% bis 35% des Speichervolumens.

Ist die nächste Wartung beispielsweise bei einem erwarteten Füllstand P_{W} von 50% des Speichervolumens vorgesehen und ist der Anteil oder Schwellenwert P_{V} beispielsweise mit P_{W}/4 festgelegt, dann zeigt das Schmiersystem die Notwendigkeit einer Wartung des Lagers oder des Getriebes an, sobald der tatsächliche Füllstand 12,5% des Speichervolumens unterschreitet. Es wird dann davon ausgegangen, dass einer zuvor genannten Schäden vorliegt, z. B. abgelöste Partikel die betroffenen Lager oder Getriebe dauerhaft stören, sind und dieser Schaden, falls niemand eingreift, die betroffenen Lager bzw. Getriebe zerstören könnte.

Gemäß einer alternativen oder zusätzlichen vorteilhaften Weiterbildung des Verfahrens wird die Notwendigkeit einer Wartung des Lagers oder des Getriebes angezeigt, wenn der Füllstand des Schmiermittels in dem Vorratsbehälter schneller sinkt als durch einen Verbrauchserwartungswert vorgegeben ist.

Dementsprechend ist das Schmiersystem eingerichtet mittels einer Wartungsanzeige, die Notwendigkeit einer Wartung des Lagers oder des Getriebes anzuzeigen, wenn der Füllstand des Schmiermittels in dem Vorratsbehälter schneller sinkt als durch einen Verbrauchserwartungswert vorgegeben ist.

Die Füllstandabnahmegeschwindigkeit oder Sinkrate wird also als Indiz für einen Fremdkörper in dem Lager oder Getriebe, für einen überdurchschnittlichen Verschleiß oder einen sonstigen zuvor genannten Schaden des Lagers oder Getriebes herangezogen, um eine außerplanmäßige Wartung zu initiieren.

Das Verfahren weist vorzugsweise ferner die Schritte auf:
Ermitteln von T(t), T(t + Δt) und bilden der Differenzen ΔT(t) und ΔT(t + Δt) zu zwei unterschiedlichen Zeitpunkten t und t + Δt,

Gleichsetzen von τ = τ_{Laständerung}, falls der Quotient $\frac{{ΔT}_{t + Δt ′}}{{ΔT}_{t ′}}$ negativ ist,
andernfalls optional Glätten des Quotienten $\frac{{ΔT}_{t + Δt ′}}{{ΔT}_{t ′}}$ und Einsetzen des Quotienten $\frac{{ΔT}_{t + Δt ′}}{{ΔT}_{t ′}}$ in die $Gleichung τ \left(t\right) = \left|\frac{- Δt}{ln \frac{{ΔT}_{t + Δt ′}}{{ΔT}_{t ′}}}\right|$ Glaichung
(wobei also nur der Betrag von τ(t) interessiert),
Gleichsetzen von τ = τ_{Max}, wenn τ(t) die eine Schwellenwert τ_{Max} überschreitet,
optional Glätten von τ(t).

Hierin ist τ eine Zeitkonstante, die die zeitliche Entwicklung des Temperaturzustandes beipielsweise aufgrund von Wärmeleitung, Wärmekapazität repräsentiert. τ_{Laständerung} und τₘₐₓ sind fest vorgegebene Grenzwerte, die beispielsweise wie im Abschnitt Kalibrieren der Windanlagen-Software beschrieben einmal ermittelt und hier eingesetzt werden. Die Dauer 5* τ wird typischerweise als Zeitgrenze angenommen, bei der sich per Definition der stationäre Zustand C des Systems einstellt, da dann nämlich die Temperatur nur noch minimal, von der erreichbaren Grenztemperatur abweicht. Diese Schritte werden daher unter dem Begriff dynamisches Bestimmen der Zeitkonstanten τ zusammengefasst.

Nach obigem Verfahren beträgt der ermittelte Wert T also entweder τ_{Laständerung} oder τ_{Max} oder der - optional geglättete - Wert der Funktion τ(t).

Soweit hierin von "glätten" die Rede ist, ist ohne anderweitige Erläuterung stets eine exponentielle Glättung gemeint, wie sie für τ(t) gemäß der Formeln (45) und (46) für C(t) gemäß der Formel (56) weiter untern dargelegt ist.

Im Folgenden geht es um die rechnerische Vorhersage des stationären Zustandes.

Das Verfahren weist aufbauend auf der vorstehenden dynamischen Bestimmung von τ weiterhin bevorzugt die Schritte auf:
Berechnen eines stationären Zustandes gemäß folgender Gleichung $C = C \left(t\right) \left(lim t\to ∞\right) = ΔT \left(lim t\to ∞\right) = \frac{ΔT \left(t+Δt\right) ∗ {e}^{\left(Δt/τ\right)} - ΔT \left(t\right)}{\left(1-{e}^{\left(Δt/τ\right)}\right)} ,$
optional Glätten von C(t),
Ermitteln einer Ausgleichsgeraden aus einer Mehrzahl von (optional geglätteten) Werten C(t) zu j unterschiedlichen Zeitpunkten t
Ermitteln der Steigung m und der Varianz 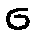 der Ausgleichsgeraden.

Bevorzugt umfasst das Verfahren auf der Berechnung des stationären Zustands basierend das Zuführen eines Schmiermittels aus einem Vorratsspeicher in das Lager oder das Getriebe, wenn die Steigung m einen vorgegebenen Steigungsschwellenwert unterschreitet und wenn die Varianz 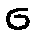 einen vorgegebenen Varianzschwellenwert unterschreitet.

Unterschreiten die Steigung m den vorgegebenen Steigungsschwellenwert und die Varianz 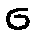 den vorgegebenen Varianzschwellenwert, wird hierin auch davon gesprochen, dass das Schmiersystem den berechneten stationären Zustand C als "gültig" bewertet.

Das Verfahren ist, auf der Berechnung des stationären Zustands basierend, weiterhin bevorzugt weitergebildet durch
das Bilden des Quotienten (ΔT/Q)/(ΔT/Q)_{Ref} nach dem Ermittlungszeitraum,
das Vergleichen des Quotienten (ΔT/Q)/(ΔT/Q)_{Ref} mit einem vorbestimmten Schwellenwert P_{T}, das Zuführen eines Schmiermittels aus einem Vorratsspeicher in das Lager oder das Getriebe, wenn der Quotient (ΔT/Q)/(ΔT/Q)_{Ref} den vorbestimmten Schwellenwert P_{T} überschreitet.

Der Schwellenwert P_{T} ist initial bevorzugt festgelegt in einen Bereich von 120% und höchstens 200%.

Der Schwellenwert P_{T} kann iterativ angepasst werden, wenn das Schmiersystem eine Notwendigkeit einer Wartung des Lagers oder des Getriebes in der zuvor beschriebenen Weise nicht angezeigt, obwohl ein vorliegender Schaden (nachträglich) erkannt wird, indem der Schwellenwert P_{T} schrittweise wenigstens um einen Betrag von wenigstens 3% und höchstens 10% gesenkt wird.

Der Schwellenwert P_{T} kann ferner iterativ angepasst werden, indem, wenn das Schmiersystem eine Notwendigkeit einer Wartung des Lagers oder des Getriebes in der zuvor beschriebenen Weise angezeigt, obwohl kein Schaden (nachträglich) erkannt wird, indem der Schwellenwert P_{T} schrittweise um einen Betrag von wenigstens 3% und höchstens 10% erhöht wird.

Das Schmiersystem weist weiterhin bevorzugt auf,
- eine Einrichtung zur dynamischen Bestimmung der Zeitkonstante τ gemäß dem vorstehenden beschriebenen Verfahren und/ oder
- eine Einrichtung zum Berechnen des stationären Zustands C gemäß dem vorstehenden beschriebenen Verfahren und/ oder
- eine Einrichtung zum Ermitteln einer Ausgleichsgeraden gemäß dem vorstehenden beschriebenen Verfahren und/oder
- eine Einrichtung zum Bewerten des stationären Zustands C als gültig und/ oder
- eine Einrichtung zum Bilden des Quotienten (ΔT/Q)/(ΔT/Q)_{Ref}, zum Vergleichen des Quotienten (ΔT/Q)/(ΔT/Q)_{Ref} mit dem vorbestimmten Schwellenwert P_{T} und zum Ausgeben eines Steuersignals zum Zuführen eines Schmiermittels aus einem Vorratsspeicher in das Lager oder das Getriebe, wenn der Quotient (ΔT/Q)/(ΔT/Q)_{Ref} den Schwellenwert P_{T} überschreitet.

Ist das Schmiersystem dementsprechend ausgestaltet, ist es weiterhin vorteilhaft eingerichtet mittels einer Wartungsanzeige, die Notwendigkeit einer Wartung des Lagers oder des Getriebes anzuzeigen, wenn eine Anzahl A_{S} unmittelbar aufeinanderfolgender Überprüfungen der vorstehend beschrieben Art ergibt, dass eine Schmierung erforderlich ist, wobei frühestens im letzten Drittel oder spätestens im letzten Achtel des Ermittlungszeitraums die maximale Anzahl A der aufeinanderfolgenden Überprüfungen ermittelt wird, die darauf hindeuten, dass eine Schmierung erforderlich ist und die Zahl A_{S} vorzugsweise auf minimal 1,5*A und maximal 10*A festgelegt wird.

Das Schmiersystem ist vorzugsweise ferner eingerichtet, eine Sperrzeit Ts nach jeder Schmierung von vorzugsweise wenigstens einer halben Stunde und von vorzugsweise höchstens 24 Stunden einzuhalten, wodurch verhindert wird, dass das Schmiersystem eine erneute Schmierung durchführt, bevor die Schmierstoffmenge der zuvor erfolgten Schmierung im Lager oder Getriebe verteilt ist.

Gemäß einer alternativen oder zusätzlichen vorteilhaften Ausgestaltung des Verfahrens wird der Wartungsbedarf des Lagers oder Getriebes angezeigt, wenn eine Anzahl A_{S} unmittelbar aufeinanderfolgender Überprüfungen ergibt, dass eine Schmierung erforderlich ist.

Dementsprechend ist das Schmiersystem mit einer Wartungsanzeige ausgestattet, um den Wartungsbedarf des Lagers oder Getriebes anzuzeigen, wenn die Anzahl A_{S} unmittelbar aufeinanderfolgender Überprüfungen darauf hindeutet, dass eine Schmierung erforderlich ist.

Die Anzahl A_{S} dient somit als Hinweis auf einen Schaden im Lager oder Getriebe, um eine außerplanmäßige Wartung einzuleiten. Die Anzahl A_{S} muss empirisch wie folgt ermittelt werden:
In der Einlaufzeit und im Ermittlungszeitraum müssen generell das Lager und das Getriebe wie zuvor planmäßig festgelegt geschmiert werden. Frühestens im letzten Drittel oder spätestens im letzten Achtel des Ermittlungszeitraums wird die maximale Anzahl A der aufeinanderfolgenden Überprüfungen, die darauf hindeuten, dass eine Schmierung erforderlich ist, ermittelt. Die Zahl A_{S} ist dann vorzugsweise auf minimal 1,5*A und maximal 10*A festzulegen.

Das Verfahren ist vorzugsweise dadurch weitergebildet, dass wenigstens eine Teilmenge des Schmiermittels aus dem Auffangbehälter über einen Filter gereinigt und in das Lager bzw. Getriebe gepumpt wird, wenn das Lager bzw. Getriebe über einen bestimmten Zeitraum nicht gewartet wurde und/oder der externe Vorratsbehälter einen bestimmten Mindestfüllstand unterschreitet oder leer ist.

Dementsprechend weist das Schmiersystem vorzugsweise ferner einen Filter auf und ist eingerichtet im Notbetrieb Schmiermittel aus dem Auffangbehälter durch den Filter und in das Lager bzw. Getriebe zu pumpen, wenn das Lager bzw. Getriebe über einen bestimmten Zeitraum nicht gewartet wurde und/oder der Vorratsbehälter einen bestimmten Mindestfüllstand unterschreitet oder leer ist.

Die erfindungsgemäße Windkraftanlage weist ein Schmiersystem der vorstehend beschrieben Art auf.

Die erfindungsgemäße Windkraftanlagenanordnung weist wenigstens zwei Windkraftanlagen der vorstehend beschriebenen Art auf, die beide eingerichtet sind, mittels einer kabelgebundenen oder drahtlosen Kommunikationsschnittstelle der Gestalt miteinander zu kommunizieren, dass sie die jeweils ermittelten Quotienten ΔT/Q austauschen.

Der aus den im Ermittlungszeitraum ermittelten Referenzgrößen gebildete Referenzwert (ΔT/Q)_{Ref}, kann einer Plausibilitätsprüfung unterzogen werden und nur solche Werte, die die Plausibilitätsprüfung positiv durchlaufen als vom Schmiersystem als "gültig" bewertet werden. Je mehr dieser gültigen Quotienten berechnet werden, desto besser ist die Statistik und umso zuverlässiger lassen sich Schäden erkennen. Wird der Quotient (ΔT/Q)_{Ref} als Funktion der Temperatur T_{Ref}, der Umgebungstemperatur T_{URef} und der Drehzahl n_{Ref} oder der Leistung P_{Ref} ermittelt und werden diese Werte in 10-Prozent-Intervallen gespeichert, sind mindestens 10 × 10 × 10 = 1000 Quotienten (ΔT/Q)_{Ref} erforderlich. Angenommen, die Windkraftanlagenanordnung umfasst zwei Windkraftanlagen des oben beschriebenen Typs und es handelt sich um zwei identische Windkraftanlagen, d. h. Windkraftanlagen desselben Typs, die auch dasselbe Schmiermittel verwenden, und jede Windkraftanlage ermittelt während des Ermittlungszeitraums 700 Quotienten (ΔT/Q)_{Ref}, dann gibt es insgesamt 1400 solcher Quotienten (ΔT/Q)_{Ref}, und jedes der beiden Schmiersysteme kann die ermittelten Quotienten (ΔT/Q)_{Ref} des anderen Schmiersystems in seiner Datenbank ergänzen, wodurch eine zuverlässigere Erkennung drohender Schäden erreicht wird. Angenommen, die beiden Schmiersysteme verwenden nicht dasselbe Schmiermittel, dann können die Quotienten (ΔT/Q)_{Ref} nicht miteinander verglichen werden und die Schmiersysteme können nicht die Quotienten (ΔT/Q)_{Ref} des anderen Schmiersystems verwenden. Generell können im Ermittlungszeitraum wahlweise keine, eine, zwei der Größen oder alle drei Größen T_{ref}, T_{URef}, Q_{Ref} bzw. T_{Ref}, ΔT_{Ref} und Q_{Ref} mit oder ohne die zugehörigen Quotienten gespeichert werden.

Der erreichte Vorteil ist somit eine genauere Ermittlung des Reibungskoeffizienten (Roll- und/ oder Gleitreibung) durch das Schmiersystem.

### Theoretischer Hintergrund der Erfindung für thermisch entkoppelte Lager

Die Reibungsarbeit (Roll- und/ oder Gleitreibung), die an einem Lager abfällt, beträgt gemäß der bekannten Gleichung (1): ${W}_{R} = \int {F}_{R} ds$ (1)
W_{R}: benötigte Reibungsarbeit (Roll- und/ oder Gleitreibung), um die Reibungskraft F_{R} (Roll- und/ oder Gleitreibung) zu überwinden
F_{R}: Reibungskraft (Roll- und/ oder Gleitreibung)
ds: Strecke, über welche integriert wird

Dabei gilt für das gesamte Dokument je nach Lager- oder Getriebeart entweder "Gleit- und Rollreibung" oder "Gleitreibung oder Rollreibung".

Aus Gleichung (1) ergibt sich: ${W}_{R} = \int \frac{{F}_{R} ∗ ds}{ds} ∗ \frac{ds}{dt} ∗ dt = \frac{∮ {F}_{R} ds}{∮ ds} ∗ \frac{Δ s}{Δ t} ∗ \int dt = \frac{∮ {F}_{R} ds}{Δ s} ∗ \frac{Δ s}{Δ t} ∗ t$ (2)
t: Zeit
dt: Zeit, über welche integriert wird
Δt: Zeit, während die Reibungskraft (Roll- und/ oder Gleitreibung) wirkt
Δs: Strecke, über welche die Reibungskraft (Roll- und/ oder Gleitreibung) wirkt

Dabei ergibt sich für die Strecke: $\frac{Δ s}{Δ t} = U ∗ n = 2 πR ∗ n$ (3)
U: Umfang des Lagers
R: Radius des Lagers
n: Drehzahl des Lagers

Die Abhängigkeit der Reibungskraft (Roll- und/ oder Gleitreibung) vom Gewicht ist in Gleichung (4) angegeben: $\frac{∮ {F}_{R} ds}{Δ s} = \frac{∮ μ ∗ {F}_{N} ds}{Δ s} = μ ∗ {k}_{L} ∗ {F}_{N} = μ ∗ {k}_{L} ∗ {m}_{A} ∗ g$ (4)
$\frac{∮ {F}_{R} ds}{Δ s}$: durchschnittliche Reibungskraft (Roll- und/ oder Gleitreibung)
µ * k_{L}: durchschnittlicher Reibungskoeffizient (Roll- und/ oder Gleitreibung) über die gesamte Laufbahn des Lagers
µ: Reibungskoeffizient (Roll- und/ oder Gleitreibung)
F_{N}: Normalkraft
k_{L}: durchschnittlicher Anteil des Lagerumfangs, auf den die Masse m_{A} wirkt
m_{A}: Masse, die das Lager belastet
g: Fallbeschleunigung = 9,81 m/s²

Damit ergibt sich die Reibungsarbeit (Roll- und/ oder Gleitreibung) gemäß den Gleichungen (2), (3) und (4) zu: ${W}_{R} = μ ∗ {k}_{L} ∗ {m}_{A} ∗ g ∗ 2 ∗ π ∗ R ∗ n ∗ t$ (5)

Die an die Umgebung abgegebene Wärmeenergie des Lagers als Funktion von dessen TemperaturerhöhungΔTzeigt die bekannte Gleichung (6): ${W}_{Q} = {\int }_{0}^{t} {k}_{Q} Δ T dt$ (6)
W_{Q}: übertragene Wärmeenergie
k_{Q}: Wärmeleitfähigkeit
t: Zeit der Wärmeleitung
ΔT: Lagertemperaturerhöhung gegenüber dessen Umgebung
dt: Zeit, über welche integriert wird

Weiterhin ist in dem Lager die innere thermische Energie W_{I} gespeichert: ${W}_{I} = {m}_{L} ∗ {c}_{I} ∗ Δ T$ (7)
m_{L}: Masse des Lagers
c_{I}: spezifische Wärmekapazität 450 bis 550 J/(kg*K) für Eisen

Dies ist auch bekannt.

Setzt man gemäß den Gleichungen (5), (6) und (7) entsprechend des Energieerhaltungssatzes: $\frac{d}{dt} \left({W}_{R}+{W}_{Q}+{W}_{I}\right) = 0$ (8) so ergibt sich: $a + b ∗ Δ T + c ∗ \frac{d}{dt} Δ T = 0$ (9) mit: $a = μ ∗ {k}_{L} ∗ {m}_{A} ∗ g ∗ 2 ∗ π ∗ R ∗ n$ (10) $b = {k}_{Q}$ (11) $c = {m}_{L} ∗ {c}_{I}$ (12)

Die Lösung der Differentialgleichung ist bekannt: $Δ T \left(t\right) = k ∗ {e}^{- \frac{b}{c} ∗ t} - \frac{a}{b}$ (13) k: beliebige reelle Zahl

Nach t = 5τ mit $τ = \frac{c}{b} = \frac{{m}_{L} ∗ {C}_{I}}{{k}_{Q}}$ (14)
τ: Zeitkonstante für das Abklingen des exponentiellen Anteils
stellt sich ein stationärer Zustand C ein: $Δ T = - \frac{a}{b}$ (15)

Mit den Gleichungen (14) und (15) erhält man für b: $\frac{1}{b} = \frac{Δ T}{- a} = \frac{τ}{c}$ (16) und somit für *τ* und ΔT mit Gleichung (14): $τ = \frac{Δ T}{n ∗ μ} ∗ \left(-\frac{{m}_{L} ∗ {c}_{I}}{{m}_{A} ∗ g ∗ 2 ∗ π ∗ R ∗ {k}_{L}}\right)$ (17) $Δ T = μ ∗ n ∗ \left(-\frac{τ ∗ {m}_{A} ∗ g ∗ 2 ∗ π ∗ R ∗ {k}_{L}}{{m}_{L} ∗ {c}_{I}}\right) = - μ ∗ n ∗ {m}_{A} ∗ g ∗ 2 ∗ π ∗ R ∗ \left(\frac{{k}_{L}}{{k}_{Q}}\right)$ (18) und $\frac{Δ T}{n} = {k}_{ges} ∗ μ$ (19) mit ${k}_{ges} = - {m}_{A} ∗ g ∗ 2 ∗ π ∗ R ∗ \frac{{k}_{L}}{{k}_{Q}}$ (20)

Der Quotient aus der Lagertemperaturerhöhung ΔT und der Drehzahl n ist proportional zum Reibungskoeffizient (Roll- und/ oder Gleitreibung) des Lagers: $μ ∼ \frac{Δ T}{n}$ (21)

Berücksichtigt man, dass beim Überschreiten der Temperatur des Lagers um einen Schwellenwert eine zusätzliche Kühlung des Lagers mittels einem Lüfter oder einer Flüssigkeit, die durch einen Kreislauf aus Lager und Kühlkörper gepumpt wird, erfolgt, dann gilt: $b = {b}_{0} für T < {T}_{0}$ und $b = {b}_{1} für T ⩾ {T}_{0}$
T: Temperatur des Lagers
T₀: Schwellenwert der Temperatur, bei der die Kühlung zugeschaltet wird
b₀, b₁: Konstanten

Auch ist der Reibungskoeffizient (Roll- und/ oder Gleitreibung) des Lagers abhängig von der Viskosität des Schmiermittels, die wiederum abhängig von der Temperatur des Lagers ist.

Um solche Nichtlinearitäten zu berücksichtigen, muss der Quotient ΔT/n gegebenenfalls separat von einer der Größen, zwei der Größen oder allen drei Größen n, T und T_{U} oder n, T und ΔT berechnet werden. $\frac{Δ T}{n} = f \left(T, {T}_{U}, n\right)$ (22a) $\frac{Δ T}{n} = f \left(T,ΔT,n\right)$ (22b) T_{U}: Umgebungstemperatur T = ΔT+T_{U}

Dabei ist zu beachten, dass das Lager über eine Kupplung, einen Flansch, eine Muffe oder eine sonstige Verbindung aus Materialien mit geringer Wärmeleitfähigkeit thermisch von einem optionalen Getriebe und dem Generator zu entkoppeln ist.

### Theoretischer Hintergrund für thermisch entkoppelte Getriebe:

Für Getriebe gilt die bekannte Gleichung: $M = {F}_{U} ∗ R$ (23)
M: Drehmoment
F_{U}: Kraft am Umfang U
R: Radius des Zahnrades

Weiterhin gilt die bekannte Gleichung: $P = M ∗ 2 ∗ π ∗ n$ (24)
P: vom Getriebe übertragene Leistung
n: Drehzahl des Getriebes

Die auf den Umfang eines Zahnrades in einem Getriebe wirkende Kraft steigt linear mit dem Drehmoment. Die auf die Zähne eines Zahnrades wirkende Kraft F_{U} steigt linear mit der Kraft am Umfang des Zahnrades. Die Reibungskraft (Roll- und/ oder Gleitreibung) auf die Zähne des Zahnrades steigt wiederum linear mit der auf die Zähne des Zahnrades wirkenden Kraft. Jede Umdrehung des Zahnrades erzeugt somit die Reibungsarbeit (Roll- und/ oder Gleitreibung): $\frac{∮ {F}_{R} ds}{∮ ds} = \frac{∮ {F}_{R} ds}{Δ s} = \frac{μ ∗ {k}_{G} ∗ {F}_{U} ∗ Δ s}{Δ s} = μ ∗ {k}_{G} ∗ \frac{M}{R} = μ ∗ {k}_{G} ∗ \frac{P}{2 ∗ π ∗ R ∗ n}$ (25) k_{G}: Getriebespezifische Konstante

Dies gilt auch für Planetengetriebe. Somit ergibt sich aus Gleichung (2) und (3) und (25): ${W}_{R} = \frac{∮ {F}_{R} ds}{Δ s} ∗ \frac{Δ s}{Δ t} ∗ t = μ ∗ {k}_{G} ∗ P ∗ t$ (26)

Unter der Berücksichtigung, dass die Gleichungen für die abgegebene Wärmeenergie und die innere thermische Energie analog zu denen der Lager sind, erhält man: $\frac{d}{dt} {W}_{R} = a = μ ∗ {k}_{G} ∗ P$ (27)

Es ist zu beachten, dass die Reibungsarbeit der Getriebelager analog zu Gleichung (5) zur Reibungsarbeit der Getriebezähne (Gleichung 27) hinzugerechnet werden muss.

Nimmt man als erste Näherung an, dass der Reibungskoeffizient der Zähne proportional zu dem der Lager ist und dass die Drehzahl n proportional zur übertragenen Leistung P ist, so ergibt sich eine zu Gleichung (27) analoge Gleichung, insbesondere wenn berücksichtigt wird, dass die Reibungsarbeit der Lager deutlich geringer ist als die Reibungsarbeit der Zähne. Dabei handelt es sich bei der Reibung immer um (Roll- und/oder Gleitreibung). Die Berücksichtigung von Nichtlinearitäten wird in einem der folgenden Abschnitte behandelt.

Analog zu den Gleichungen (12) und (16) ergibt sich mit Gleichung (27): $Δ T = - \left(\frac{a ∗ τ}{c}\right) = μ ∗ P ∗ τ ∗ \left(-\frac{{k}_{G}}{{c}_{I} ∗ {m}_{G}}\right)$ (28) m_{G}: Masse des Getriebes

Entsprechend den Gleichungen (11), (12) und (14) folgt: $τ = \frac{{c}_{I} ∗ {m}_{G}}{{k}_{Q}}$ (29) und nach dem Ersetzen von τ in Gleichung (28): $μ = \frac{Δ T}{P} ∗ \left(-\frac{{k}_{Q}}{{k}_{G}}\right)$ (30) und somit: $μ ∼ \frac{Δ T}{P}$ (31)

Der Reibungskoeffizient (Roll- und/ oder Gleitreibung) ist proportional dem Quotienten aus der Temperaturerhöhung ΔT des Getriebes und dessen übertragener Leistung P.

Analog zu den Gleichungen (22a) und (22b) muss der Quotient ΔT/P zur Berücksichtigung von Nichtlinearitäten gegebenenfalls separat von einer der Größen, zwei der Größen oder allen drei Größen P, T und T_{U} bzw. P, T und ΔT berechnet werden. $\frac{Δ T}{P} = f \left(T, {T}_{U}, P\right)$ (32a) $\frac{Δ T}{P} = f \left(T,ΔT,P\right)$ (32b)

Dabei ist zu beachten, dass das Getriebe über Kupplungen, Flansche, Muffen oder sonstige Verbindungen aus Materialien mit geringer Wärmeleitfähigkeit thermisch von dem Lager und Generator zu entkoppeln ist.

### Ermittlung des Reibungskoeffizienten (Roll- und/ oder Gleitreibung) der Lager bzw. Getriebe

An den Lagern bzw. Getrieben und deren Umgebung müssen zur Messung deren Temperatur, zur Messung der Temperatur in deren Umgebung, zur die Messung der Drehzahl n der Lager und zur Messung der übertragenen Leistung P der Getriebe Sensoren vorhanden sein. Diese sind teilweise oder ganz standardmäßig für verschiedene Aufgaben in der Windkraftanlage enthalten.

Mit der im Folgenden als Energiebezugsgröße bezeichneten Größe Q gilt für Lager Gleichung (33) und für Getriebe Gleichung (34): $n = Q$ (33) $P = Q$ (34)

Vergleicht man die Gleichungen (21), (22a), (22b), (31), (32a), (32b), (33) und (34) so erhält man: $μ ∼ \frac{Δ T}{Q} = f \left(T, {T}_{U}, Q\right)$ (35a) $μ ∼ \frac{Δ T}{Q} = f \left(T,ΔT,Q\right)$ (35b)

Sobald die Lager oder Getriebe eingelaufen sind, z. B. nach drei Monaten, ermittelt das Schmiersystem den Quotienten ΔT/Q über einen Ermittlungszeitraum T_{M}, eventuell noch abhängig von einer der Größen, zwei der Größen oder allen drei Größen Q, T und T_{U} oder Q, T und ΔT (siehe Gleichungen 35a und 35b).

Dabei werden nur Werte berücksichtigt, bei denen die Energiebezugsgröße Q über einem bestimmten Bruchteil des Nennwertes, z. B. von mehr als 20% des Nennwertes, liegt und über einen bestimmten Zeitraum Δt, z. B. 5τ, annähernd konstant ist. Als annähernd konstant wird die Energiebezugsgröße Q gewertet, wenn sie z.B. über 3τ um weniger als ±30% variiert und danach über 2τ um weniger als ±10% variiert. Der Zustand einer über den Zeitraum Δt annähernd konstanten Energiebezugsgröße Q wird auch als "stationär" bezeichnet und kann von einer Windkraftanlagen-Software nummerisch gemäß den Ausführungen in demAbschnitt "Vorhersage des stationären Zustandes" ermittelt werden.

Die mit der Funktion f gemäß Gleichung (35a) oder (35b) ermittelten Werte können bei baugleichen Windkraftanlagen zusammengefasst werden.

Dabei ist zu beachten, dass alle baugleichen Windkraftanlagen dann das gleiche Schmiermittel verwenden müssen und generell das Schmiermittel während der gesamten Nutzungsdauer der Windkraftanlage gleich bleiben muss.

### Thermisch gekoppelter Antriebsstrang, bestehend aus einem Lager, einem Generator und einem optionalen Getriebe

Für einen Antriebsstrang, der aus einem thermisch gekoppelten Lager und einem Generator besteht, kann ein Differentialgleichungssystem aus zwei Gleichungen analog zu Gleichung (8) aufgestellt werden oder aus drei Gleichungen, wenn der Antriebsstrang der Windkraftanlage ein Getriebe enthält. Die Lösung dieser Gleichungen ist sehr komplex und daher nicht zielführend.

Bei dieser Erfindung müssen daher das Lager, das Getriebe und der Generator des Antriebsstrangs der Windkraftanlage thermisch entkoppelt werden. Dies kann durch die Verwendung von Flanschen, Muffen oder sonstigen Verbindungen aus einem Material mit geringer Wärmeleitfähigkeit erreicht werden. Auch Kupplungen aus einem Material mit geringer Wärmeleitfähigkeit kommen in Frage. Diese sind insbesondere für getriebelose Antriebsstränge zu empfehlen, da sie verhindern, dass der Generator Stößen durch Windböen ausgesetzt wird.

### Modell der Windkraftanlage

Das Windkraftanlagenmodell bestand aus einem Frequenzumrichter, einem Asynchronmotor, einem Getriebe, einer Welle, einem Hauptlager, einem Gewicht, einem zweiten Lager und einem Holzgestell. Die Grundlage für die erfolgreichen Messungen und Berechnungen des Erfinders war die thermische Entkopplung des Hauptlagers vom Asynchronmotor, vom Getriebe, vom Gewicht, von der Welle und dem Holzgestell.

Der Asynchronmotor wurde über den Frequenzumrichter gespeist, wodurch die Drehzahl n variabel war. Um den Rotor einer Windkraftanlage zu simulieren, trieb der Asynchronmotor über ein Getriebe die Hauptwelle an. Die Drehzahl n der Hauptwelle und damit des Hauptlagers lag zwischen 0 und 37,5 Umdrehungen pro Minute. Ein Gewicht von 10 kg auf der Hauptwelle belastete das Hauptlager und simulierte die Masse des Windkraftanlagenrotors. Das Hauptlager wurde thermisch von der Hauptwelle entkoppelt, indem ein 4,5 cm langer Silikonschlauch auf die Hauptwelle geschoben und das 4,5 cm lange Lager auf den Silikonschlauch geschoben wurde. Das Lager wurde mit drei Schrauben, die oberflächlich mit Silikonschlauch ummantelt waren, am Holzgestell befestigt und somit davon thermisch isoliert.

Die Getriebewelle wurde über einen Silikonschlauch mit der Hauptwelle verbunden, wobei ein zusätzlicher Dichtungsring zwischen der Getriebewelle und der Hauptwelle angebracht wurde, um eine thermische Entkopplung des Lagers vom Asynchronmotor mit Getriebe zu gewährleisten.

Mit einem Keil wurde der 9 cm lange Temperatursensor vom Holzgestell auf das Lager gedrückt und mit Wärmeleitpaste, wie sie zum Verbinden einer CPU mit dem Kühlkörper verwendet wird, die thermische Verbindung zwischen dem Lager und dem Temperatursensor erhöht.

Der Temperatursensor ragte 4,5 cm aus dem Rahmen heraus. Dieser Teil des Temperatursensors war mit elektrisch leitfähigem Schaumstoff ummantelt, um ihn von der Umgebung thermisch zu isolieren und um eine elektrische Aufladung zu verhindern. Über dem elektrisch leitfähigen Schaumstoff wurde eine Schicht aus luftundurchlässigem Schaumstoff angebracht, um eine Wärmeleitung durch Konvektion zu verhindern.

Es stellte sich heraus, dass der Temperatursensor, der die Umgebungstemperatur gemessen hatte, auf die gleiche Weise von der Umgebung isoliert werden musste. Andernfalls wurde die berechnete Lagertemperaturerhöhung gegenüber der Umgebung durch Temperaturschwankungen des Heizkörpers in dem Raum, in dem sich das Windkraftanlagenmodell befand, überlagert.

Darüber hinaus mussten die Hauptwelle mit dem 10 kg schweren Gewicht, den Lagern und dem Temperatursensor thermisch (Konvektion) vom Asynchronmotor und Getriebe entkoppelt werden. Dies erfolgte mithilfe von drei Standard- Heizlüftern im Lüftermodus, d. h. ohne Heizfunktion, indem die Heizlüfter die vom Asynchronmotor und Getriebe erwärmte Luft wegbliesen.

Es ist jedoch zu beachten, dass die maximale Lagertemperaturerhöhung 1,2 °C betrug und die thermische Zeitkonstante τ₀ des Lagers mit 95 Minuten bestimmt wurde. In der Praxis ist die Lagertemperaturerhöhung, wie bekannt 20 bis 25 °C. Auch dürfte die Zeitkonstante τ₀ in der Realität deutlich niedriger sein, da der Temperatursensor im Vergleich zum Lager relativ groß und schwer und die thermische Kopplung zwischen Lager und Temperatursensor relativ schwach war.

Nicht alle der im Modell getroffenen Maßnahmen sind in der Praxis nötig.

### Experimentelle Bestimmung der Zeitkonstanten τ₀

Die exakte Berechnung der Konstante τ ist aufwendig. Daher bestimmt man sie am einfachsten experimentell. Ist die Reibungsarbeit (Roll- und/ oder Gleitreibung) W_{R} gleich Null, d. h. n = P = Q = 0, so reduziert sich Gleichung (13) mit Gleichung (14) und mit a= 0 (siehe Gleichung (10) und (27) ) zu: $Δ T \left(t\right) = k ∗ {e}^{- \frac{t}{τ}}$ (36)

Folglich wählt man einen Zeitpunkt t₁, zu dem die Lager und Getriebe längere Zeit, z. B. 2h stark beansprucht wurden, z. B. mit 20% deren Nennleistung oder mehr, unterbricht die Beanspruchung der Lager und Getriebe, indem man deren Drehzahl n bzw. deren übertrage Leistung P auf Null reduziert, und zeichnet den Verlauf der Temperatur des Lagers bzw. Getriebes auf. Dann ermittelt man aus der Aufzeichnung den Zeitpunkt t₂, an dem deren TemperaturerhöhungΔTauf e⁻¹, d. h. auf 37%, abgeklungen ist und man erhält den Anhaltspunkt für die Zeitkonstante τ = τ₀: ${t}_{2} - {t}_{1} = {τ}_{0}$ (37)

### Dynamische Bestimmung der Zeitkonstanten τ(t)

Da die Zeitkonstante τ während des Betriebs variiert ermittelt man sie am genauesten dynamisch. Gemäß Gleichung (13) und (14) gilt: $Δ T \left(t\right) = k ∗ {e}^{\frac{- t}{τ}} - \frac{a}{b}$ (38)

Differenziert man Gleichung (38) nach der Zeit und wählt zwei unterschiedliche Zeitpunkte t₁ und t₂ so erhält man: $Δ {T}_{1} ′ = k ∗ \frac{1}{τ} {e}^{\frac{- {t}_{1}}{τ}}$ (39) $Δ {T}_{2} ′ = k ∗ \frac{1}{τ} {e}^{\frac{- {t}_{2}}{τ}}$ (40)

Die Division von Gleichung (40) durch Gleichung (39) ergibt: $\frac{Δ {T}_{2 ′}}{Δ {T}_{1 ′}} = \frac{{e}^{\frac{- {t}_{2}}{τ}}}{{e}^{\frac{- {t}_{1}}{τ}}} = {e}^{\frac{{t}_{1} - {t}_{2}}{τ}} : = {q}_{t}$ (41) und $ln \frac{Δ {T}_{2} ′}{Δ {T}_{1} ′} = \frac{{t}_{1} - {t}_{2}}{τ}$ (42) oder $τ \left(t\right) = \frac{{t}_{1} - {t}_{2}}{ln \frac{Δ {T}_{2} ′}{Δ {T}_{1} ′}}$ (43) mit t₂-t₁ z.B. 20,0min (τ₀/4.5).

Die Ableitung Δ*T*₁' und Δ*T*₂' erhält man z. B. mit der Steigung jeweils einer Ausgleichsgerade die nach der Methode der kleinsten Quadrate ermittelt wurde, wobei Ausgleichsgeraden bekannt sind: $Δ T ′ = \frac{{\sum }_{i = 1}^{j} \left({t}_{i}-\overline{t}\right) ∗ \left(Δ{T}_{i}-Δ\overline{T}\right)}{{\sum }_{i = 1}^{j} {\left({t}_{i}-\overline{t}\right)}^{2}}$ (44)
*tᵢ*: Zeitpunkt i, z. B. derart,dass t₀ = 0 ist
*t*_{*i*+1} - *tᵢ*z. B. $0 , 021 min = \frac{{τ}_{0}}{min} / 4500$
*t̅*: Mittelwert der j Zeitpunkte tᵢ
Δ*Tᵢ*: Gemessene Temperaturerhöhung zum Zeitpunkt i
Δ*T̅*: Mittelwert der j gemessenen Temperaturerhöhungen ΔTᵢ
*j*: Anzahl der Messwerte in der Ausgleichsgerade z. B. $950 = 10 ∗ \frac{{τ}_{0}}{min}$

Da der Quotient qt entsprechen Gleichung (41) während des Betriebs starken Schwankungen unterlegen ist, ist er z. B. mit dem bekannten Verfahren der exponentiellen Glättung erster Ordnung zu glätten: ${q}_{n + 1} = \left(1-α\right) ∗ {q}_{n} - α ∗ {q}_{t}$ (45)
qₙ₊₁: Nächster iterierter Quotient
*qₙ*: Vorhergehender Quotient der Iteration
*qₜ*: Mit Gleichung (41) berechneter Quotient $\frac{Δ {T}_{2} ′}{Δ {T}_{1} ′}$ zum Zeitpunkt der Iteration n
α: Glättungsfaktor z. B. 0.1

Ändert sich die Last, so kann der Quotient qt negativ werden. Ist dies der Fall, so wird die Berechnung mit τ_{Laständerung} z. B. 0.5*τ₀ fortgesetzt. Ansonsten ist τ gemäß Gleichung (43) zu berechnen. Für den Fall, dass τ negativ wird, ist mit dem Betrag von τ weiter zu rechnen (vgl. Gleichung (43) und (55)). Um Ausreißern bei der Messung und Berechnung von τ vorzubeugen ist mit τ_{Max}, z. B. 1.5*τ₀ weiter zu rechnen, falls τ den Wert τ_{Max} überschreitet.

Da die Zeitkonstante τ während des Betriebs Schwankungen unterlegen ist, ist sie noch einmal zu glätten z. B. mit dem bekannten Verfahren der exponentiellen Glättung erster Ordnung: ${τ}_{n + 1} = \left(1-α\right) ∗ {τ}_{n} - α ∗ {τ}_{t}$ (46)
*τ*_{*n*+1}: Nächste iterierte Zeitkonstante
τ*ₙ*: Vorhergehende Zeitkonstante der Iteration
τ*ₜ*: Wert der Zeitkonstante τ(t), berechnet wie in diesem Abschnitt beschrieben, zum Zeitpunkt der Iteration n
α: Glättungsfaktor z. B. 0.1

Bekanntermaßen liegen sinnvolle Werte für den Glättungsfaktor α zwischen 0,1 und 0,3. Der Erfinder hat die besten Ergebnisse mit dem Wert 0,1 erhalten.

Anstelle der Gleichungen (44), (45) und (46) kann jedes beliebige andere Glättungsverfahren bzw. Verfahren zur Berechnung der Ableitung ΔT'eingesetzt werden.

### Vorhersage des stationären Zustandes

Gemessen wird die Temperaturerhöhung zu einem Zeitpunkt t₁ und einem späteren Zeitpunkt t₂. $Δ T \left({t}_{1}\right) = k ∗ {e}^{\left(-{t}_{1}/τ\right)} - C$ (47) $Δ T \left({t}_{2}\right) = k ∗ {e}^{\left(-{t}_{2}/τ\right)} - C$ (48) $C = - \left(\frac{a}{b}\right) = Δ T \left(limt\to ∞\right)$ (49)

Aus den Gleichungen (47) und (48) ergibt sich: $\frac{C + Δ T \left({t}_{1}\right)}{C + Δ T \left({t}_{2}\right)} = \frac{{e}^{\left(-{t}_{1}/τ\right)}}{{e}^{\left(-{t}_{2}/τ\right)}}$ (50)

Substituiert man t₂ - t₁ durch Δt z. B. 3,3min (0,035*τ₀) ${t}_{2} - {t}_{1} = Δ t$ (51) so erhält man die Gleichung (52): $\frac{C + Δ T \left({t}_{1}\right)}{C + Δ T \left({t}_{2}\right)} = {e}^{\left(Δt/τ\right)}$ (52)

Gleichung (52) lässt sich zu Gleichung (53) und (54) umformen. $C + Δ T \left({t}_{1}\right) = {e}^{\left(Δt/τ\right)} ∗ \left(C+ΔT\left({t}_{2}\right)\right)$ (53) $C ∗ \left(1-{e}^{\left(Δt/τ\right)}\right) = Δ T \left({t}_{2}\right) ∗ {e}^{\left(Δt/τ\right)} - Δ T \left({t}_{1}\right)$ (54)

Damit lässt sich der stationäre Zustand C durch Gleichung (55) vorhersagen: $C \left({t}_{1}, {t}_{2}\right) = Δ T \left(limt\to ∞\right) = \frac{Δ T \left({t}_{2}\right) ∗ {e}^{\left(Δt/τ\right)} - Δ T \left({t}_{1}\right)}{\left(1-{e}^{\left(Δt/τ\right)}\right)}$ (55)

Hier sind ΔT(t₁) und ΔT(t₂) z. B. 3,3 min (0,035*τ₀) auseinanderliegende Temperaturerhöhungen ΔT(tᵢ), wobei jeder Wert ΔT(tᵢ) aus geglätteten oder z. B 40 gemittelten Werten Tᵢ-T_{U_i} besteht, wobei Tᵢ ein Messwert der Lager- oder Getriebetemperatur und T_{U_i} ein Messwert der Umgebungstemperatur ist.

Die Zeitkonstante τ wird entsprechend dem Abschnitt "Dynamische Ermittlung der Zeitkonstanten τ₍ₜ₎" berechnet.

Da der vorhergesagte stationäre Zustand während des Betriebs Schwankungen unterliegt, ist dieser erneut zu glätten, z. B. mit dem bekannten Verfahren der exponentiellen Glättung erster Ordnung: ${C}_{n + 1} = \left(1-α\right) ∗ {C}_{n} - α ∗ C \left({t}_{1}, {t}_{2}\right)$ (56)
*C*_{*n+*1}: Nächster iterierter vorhergesagter stationärer Zustand
*Cₙ:* Vorhergehender stationärer Zustand der Iteration
*C*(*t*₁*, t*₂): Mit Gleichung (55) berechneter stationärer Zustand zum Zeitpunkt der Iteration n
α: Glättungsfaktor z. B. 0.1

Auch hier erzielte der Erfinder die besten Ergebnisse mit dem Wert α = 0,1.

Um den vorhergesagten stationären Zustand zu identifizieren, ist z. B. eine Ausgleichsgerade aus z. B. acht aufeinanderfolgenden, gemittelten, vorhergesagten und geglätteten Werten Cₙ₊₁ := C_{Ai} zu berechnen: ${C}_{A} = m ∗ t + {b}_{A}$ (57)

Die Ausgleichsgeraden sind bekannt. Z. B. ergibt sich die Steigung m der Ausgleichsgeraden aus Gleichung (58): $m = \frac{{\sum }_{i = 1}^{j} \left({t}_{i}-\overline{t}\right) ∗ \left({C}_{Ai}-Δ\overline{{C}_{Aι}}\right)}{{\sum }_{i = 1}^{j} {\left({t}_{i}-\overline{t}\right)}^{2}}$ (58)
*tᵢ*: Zeitpunkt i, z. B. derart,dass t₀ = 0
*t*_{*i*+1} *- tᵢ z.* B. 0,82*min* = *τ*₀/115
*t̅*: Mittelwert der j Zeitpunkte tᵢ
*C_{Ai}*: Vorhergesagte, geglättete Temperaturerhöhung Cₙ₊₁ zum Zeitpunkt i
*C̅_̅{̅A̅i̅}̅*: Mittelwert der j vorhergesagten und geglätteten Temperaturerhöhungen Cₙ₊₁
j: Anzahl der vorhergesagten, gemittelten und geglätteten Werte der Ausgleichsgerade z. B. 8 entsprechend tⱼ-t₀ = 6,6min = 0,069*τ₀

Der y-Achsenabschnitt b_{A} einer Ausgleichsgeraden berechnet sich entsprechend Gleichung (59) ${b}_{A} = \overline{{C}_{Ai}} - m ∗ \overline{t}$ (59) und die Varianz 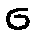 entsprechend Gleichung (60) $σ = \sqrt{\frac{1}{n - 2} ∗ {\sum }_{i = 1}^{j} {\left({C}_{Ai}-\hat{{C}_{Aι}}\right)}^{2}}$ (60)

Dabei ist bei Ausgleichsgeraden $\hat{{C}_{Aι}}$ der mit der Gleichung (57) berechnete Wert der vorhergesagten stationären Temperatur C_{A}: $\hat{{C}_{Aι}} = {b}_{A} + m ∗ {t}_{i}$ (61)

Die Vorhersage des stationären Zustandes C ist gültig, wenn z. B. die Steigung m der Ausgleichsgerade kleiner als ein vorgegebener Schwellenwert z. B. 0.02°C/min (1,6*ΔTₘₐₓ/τ₀) und z. B. die Varianz 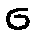 ebenfalls kleiner als ein vorgegebener Schwellenwert z. B. 0.02°C (0,017*ΔTₘₐₓ) ist. Der Wert des stationären Zustandes ist dann aufgrund der geringen Steigung m der Ausgleichsgeraden der mit Gleichung (59) berechnete Wert b_{A}. ΔTₘₐₓ ist die Lagertemperaturerhöhung bzw. Getriebetemperaturerhöhung bei dem Nennwert der Energiebezugsgröße. Diese betrug bei den Messungen des Erfinders 1,2°C.

Anstelle der Gleichungen (56) bis (61) kann jedes beliebige andere Glättungsverfahren bzw. Verfahren zur Berechnung einer Steigung und einer Genauigkeit (Varianz) eingesetzt werden.

Weitere Aspekte der Erfindung werden nachfolgend anhand von Figuren näher erläutert. Es zeigen:
- Figur 1: ein erstes Diagramm repräsentierend den Verlauf der vorhergesagten Lagertemperaturerhöhung bei optimaler Kalibrierung;
- Figur 2: ein zweites Diagramm repräsentierend den Verlauf der vorhergesagten Lagertemperaturerhöhung bei großem τ_{Max};
- Figur 3: ein drittes Diagramm repräsentierend den Verlauf der vorhergesagten Lagertemperaturerhöhung bei kleinem τ_{Max};
- Figur 4: ein viertes Diagramm repräsentierend den Verlauf der geglätteten vorhergesagten Lagertemperaturerhöhung;
- Figur 5: ein fünftes Diagramm repräsentierend den Verlauf der vorhergesagten Lagertemperaturerhöhung bei großem τ_{Laständerung};
- Figur 6: ein sechstes Diagramm repräsentierend den Verlauf der vorhergesagten Lagertemperaturerhöhung bei kleinem τ_{Laständerung};
- Figur 7: ein siebtes Diagramm repräsentierend den Verlauf der vorhergesagten Lagertemperaturerhöhung bei großem τ_{Start};
- Figur 8: ein achtes Diagramm repräsentierend den Verlauf der vorhergesagten Lagertemperaturerhöhung bei kleinem τ_{Start};
- Figur 9: ein neuntes Diagramm repräsentierend den Verlauf der vorhergesagten Lagertemperaturerhöhung bei großem Wert j für die Anzahl der Werte der Ausgleichsgerade;
- Figur 10: ein zehntes Diagramm repräsentierend den Verlauf der vorhergesagten Lagertemperaturerhöhung bei kleinem Wert j für die Anzahl der Werte der Ausgleichsgerade;
- Figur 11: ein elftes Diagramm repräsentierend den Verlauf der vorhergesagten Lagertemperaturerhöhung bei großem τ₀;
- Figur 12: ein zwölftes Diagramm repräsentierend den Verlauf der vorhergesagten Lagertemperaturerhöhung bei kleinem τ₀;
- Figur 13: ein dreizehntes Diagramm repräsentierend den Temperaturverlauf mit Anzeige des stationären Zustandes optimal kalibriert;
- Figur 14: ein vierzehntes Diagramm repräsentierend den Temperaturverlauf mit großer Zeitspanne t2 - t1 für die Berechnung der Vorhersage gemäß Gleichung (51);
- Figur 15: ein fünfzehntes Diagramm repräsentierend den Temperaturverlauf mit kleiner Zeitspanne t2 - t1 für die Berechnung der Vorhersage gemäß Gleichung (51);
- Figur 16: ein sechzehntes Diagramm repräsentierend den Temperaturverlauf mit großer Anzahl j von Werten in der Ausgleichsgerade entsprechend Gleichung (58);
- Figur 17: ein siebzehntes Diagramm repräsentierend den Temperaturverlauf mit kleiner Anzahl j von Werten in der Ausgleichsgerade entsprechend Gleichung (58);
- Figur 18: ein achtzehntes Diagramm repräsentierend den Temperaturverlauf mit großem Schwellenwert der Ausgleichsgeradensteigung m gemäß Gleichung (58);
- Figur 19: ein neunzehntes Diagramm repräsentierend den Temperaturverlauf mit kleinem Schwellenwert der Ausgleichsgeradensteigung m gemäß Gleichung (58);
- Figur 20: ein zwanzigstes Diagramm repräsentierend den Temperaturverlauf mit großem Schwellenwert der Ausgleichsgeradenvarianz 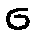 gemäß Gleichung (60);
- Figur 21: ein einundzwanzigstes Diagramm repräsentierend den Temperaturverlauf mit kleinem Schwellenwert der Ausgleichsgeradenvarianz 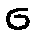 gemäß Gleichung (60); und
- Figur 22: ein zweiundzwanzigstes Diagramm repräsentierend den Temperaturverlauf mit bei schwankender Energiebezugsgröße ±15%.

### Kalibrieren der Windkraftanlagen-Software

Dieser Abschnitt mit den zugehörigen Grafiken dient den Softwareentwicklern und Ingenieuren dazu, die Werte der Variablen in ihrer Windkraftanlagen-Software optimal zu belegen. Dies wird im Folgenden mit kalibrieren bezeichnet und am Beispiel eines Lagers beschrieben. Das Ermitteln der Variablen für Getriebe ist analog durchzuführen.

Um die Windkraftanlagen-Software zu kalibrieren, kann mit Hilfe des Pitchsystems und/oder des Wechselrichters der Windkraftanlage die Energiebezugsgröße konstant gehalten oder variiert werden. Dabei muss das Kalibrieren der Windkraftanlagen-Software für einen bestimmten Windkraftanlagentyp nur einmal durchgeführt werden. Die Werte der in diesem Abschnitt aufgeführten Variablen können dann auf die für diesen bestimmten Windkraftanlagentyp ermittelten Werte eingestellt werden.

Generell gilt: Die in diesem Patent angegebenen Werte sind als Anhaltspunkte und nicht als Vorgabe zu verstehen.

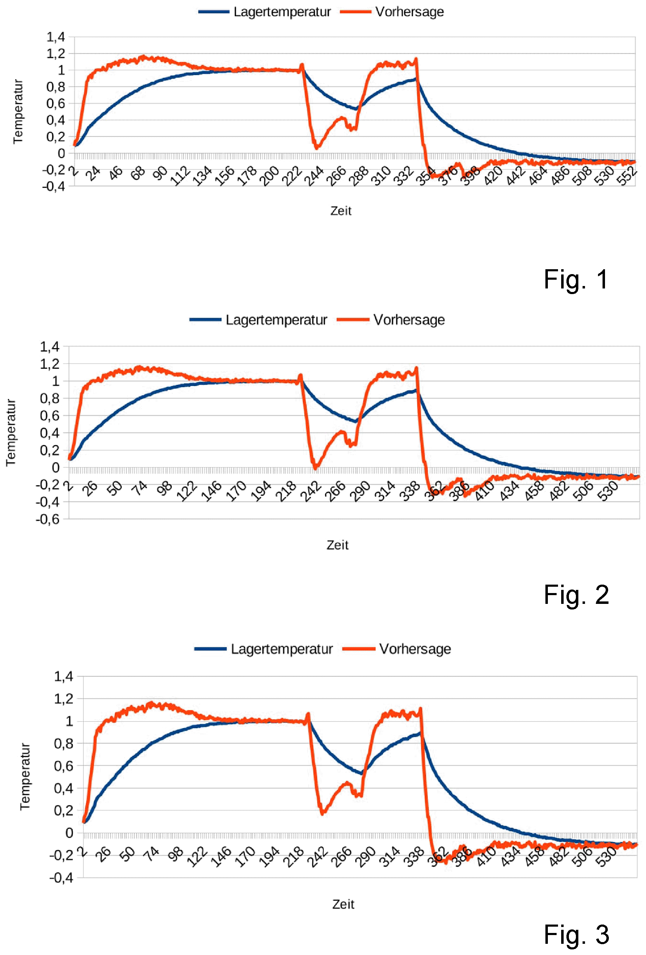

Um die Variablen der realen Windkraftanlage mit den Abbildungen 1 bis 12 zu vergleichen, wird die Energiebezugsgröße von Stillstand für 3*τ₀ auf beispielsweise 40 % des Nennwerts eingestellt, dann für 0,5*τ₀ auf die Hälfte des Wertes, anschließend für 0,5*τ₀ erneut auf z. B. 40 % des Nennwerts und schließlich für 3*τ₀ wieder auf Stillstand eingestellt.

Die Messwerte der Sensoren, z. B. die Lagertemperatur, müssen aufgezeichnet werden und können dann beliebig oft in der Windkraftanlagen-Software ausgewertet werden. Die von der Windkraftanlagen- Software berechneten Werte, wie z. B. die vorhergesagten Werte für die Lagertemperaturerhöhung, können dann z. B. mit Hilfe einer Visualisierung kalibriert werden.

Figur 1 zeigt den Verlauf der vorhergesagten Lagertemperaturerhöhung bei optimaler Kalibrierung. Dieser muss bei der realen Windkraftanlage mithilfe der Windkraftanlagen-Software nachgebildet werden. Die vorhergesagte Lagertemperaturerhöhung muss der interpolierten Lagertemperaturerhöhung im stationären Zustand entsprechen. Die vorhergesagte Lagertemperaturerhöhung muss so schnell wie möglich in eine horizontale Gerade übergehen, und die vorhergesagte Lagertemperaturerhöhung muss bei einer Energiebezugsgröße von z. B. 40 % des Nennwerts näherungsweise doppelt so hoch sein wie bei einem Energiebezugsgröße von der Hälfte des Werts.

Es ist zu beachten, dass in dem vom Erfinder implementierten Windkraftanlagenmodell die Lagertemperatur um maximal 1 ,2 °C ansteigt. Es ist bekannt, dass die Temperatur des Hauptlagers einer realen Windkraftanlage im Vergleich zur Umgebungstemperatur um 20°C bis 25°C ansteigt und dass die Lagertemperatur sogar 120°C überschreiten kann, wenn die Energiebezugsgröße nicht reduziert wird. Darüber hinaus ist die Zeitkonstante τ₀ = 95 min sehr groß, da die Lager im Windkraftanlagenmodell des Erfinders relativ klein und die Temperatursensoren relativ groß waren und die thermische Kopplung zwischen dem Lager und dem Temperatursensor schwach war. Daher gilt für das gesamte Dokument, dass eine (exponentielle) Glättung nicht immer notwendig ist. Dies macht es für Ingenieure viel einfacher, die Windkraftanlagen-Software einer realen Windkraftanlage zu kalibrieren, als es für den Erfinder war, seine Windkraftanlagenmodell-Software mit seinem Windkraftanlagenmodell zu kalibrieren.

Eine Erhöhung von τ_{Max} erhöht den Sprung in der vorhergesagten Lagertemperaturerhöhung, wenn es zu einem Sprung in der Energiebezugsgröße aus dem stationären Zustand kommt (vgl. Figur 2 mit großem Wert für τ_{Max} und Figur 3 mit kleinem Wert für τ_{Max}). Der Erfinder hat τ_{Max} auf 1,5*τ₀ festgelegt (siehe auch Abschnitt: "Dynamische Bestimmung der Zeitkonstanten τ(t)").

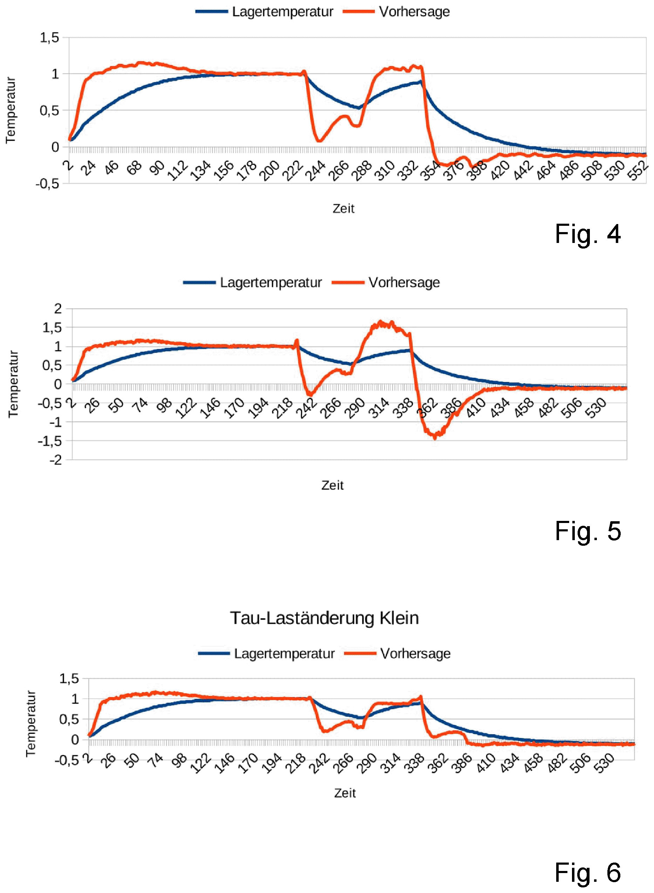

Die Erhöhung des Betrags der Zeitspanne |t₁-t₂| gemäß Gleichung (43) bei der Bestimmung der Zeitkonstante τ glättet die Kurve der vorhergesagten Lagertemperaturerhöhung (vgl. Figur 1 mit Figur 4). Der Erfinder hat den Betrag der Zeitspanne |t₁-t₂| auf 20min (τ₀/4.5) gesetzt. Figur 1 entspricht der Grafik mit einem kleinen Betrag der Zeitspanne |t₁-t₂| für die Vorhersage der Lagertemperatur.

Eine Erhöhung der Zeitkonstante τ_{Laständerung} vergrößert den Sprung in der vorhergesagten Lagertemperaturerhöhung, wenn es zu einem Sprung in der Energiebezugsgröße kommt (vgl. Figur 5 mit großem Wert für τ_{Laständerung} und Figur 6 mit kleinem Wert für τ_{Laständerung}, siehe auch Abschnitt: "Dynamische Bestimmung der Zeitkonstanten τ(t)"). Der Erfinder hat die Zeitkonstante τ_{Laständerung} auf 0,5*τ₀ gesetzt.

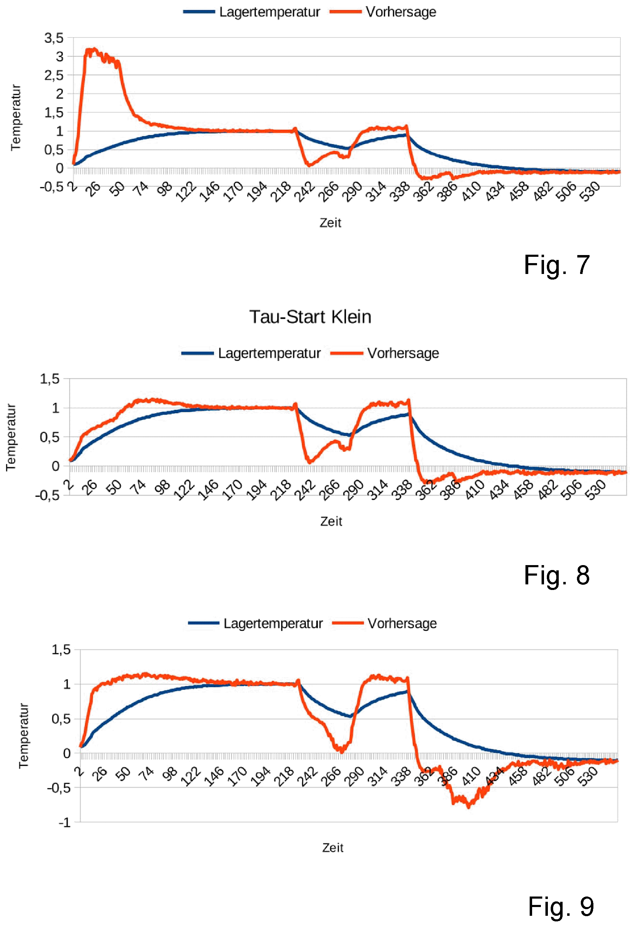

Zu Beginn des Programms stehen keine Werte für die Berechnung von τ zur Verfügung. Daher wird τ = τ_{Start} direkt nach dem Start der Windkraftanlagen-Software z. B. 0.5*τ₀ lang ein konstanter Wert zugewiesen. Eine Erhöhung von τ_{Start} erhöht die vorhergesagte Lagertemperaturerhöhung zu Beginn des Programms (vgl. Figur 7 mit großem Wert für τ_{Start} und Figur 8 mit kleinem Wert für τ_{Start}). Der Erfinder hat die Zeitkonstante τ_{Start} auf 0,5*τ₀ festgelegt.

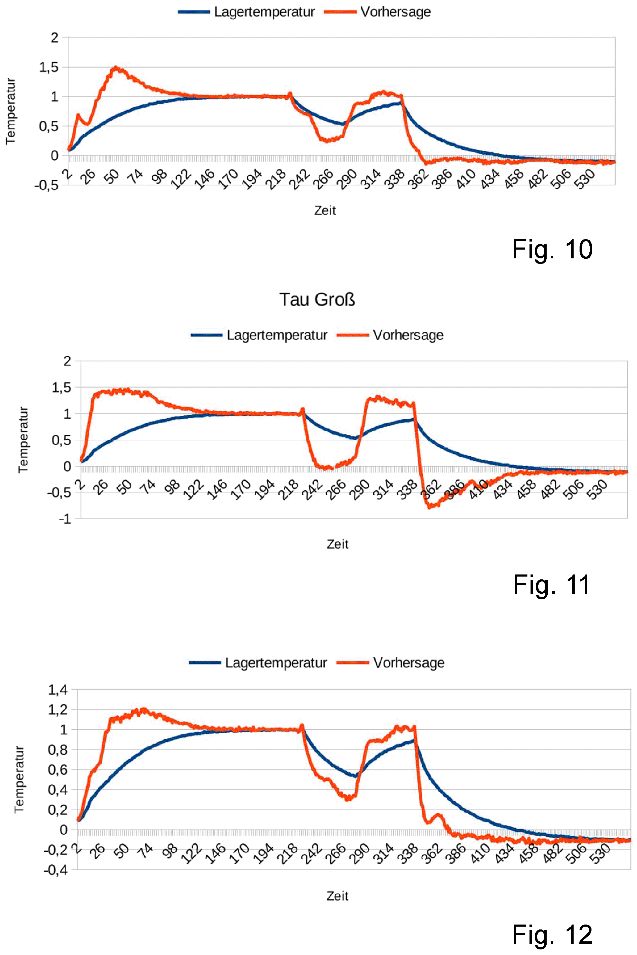

Eine Erhöhung der Anzahl der Werte j der Ausgleichsgeraden gemäß Gleichung (44) führt zu größeren Amplituden in der vorhergesagten Lagertemperaturerhöhung im Falle eines Sprungs in der Energiebezugsgröße (vgl. Figur 9, mit großem Wert j für die Anzahl der Werte der Ausgleichsgerade gemäß Gleichung (44), und Figur 10, mit kleinem Wert j für die Anzahl der Werte der Ausgleichsgerade gemäß Gleichung (44)). Der Erfinder hat die Anzahl der Werte j auf $950 = 10 ∗ \frac{{τ}_{0}}{min}$ festgelegt.

Eine Erhöhung des Wertes τ₀ gemäß Gleichung (37) führt zu größeren Amplituden bei der vorhergesagten Lagertemperaturerhöhung (vgl. Figur 11 mit großem Wert für τ₀ und Figur 12 mit kleinem Wert für τ₀). Der Erfinder hat den Wert τ₀ = 95 min gewählt. Dieser Wert ist jedoch sehr groß, da die Lager im Windkraftanlagenmodell des Erfinders relativ klein und die Temperatursensoren relativ groß waren und die thermische Kopplung von Lager und Temperatursensor schwach war.

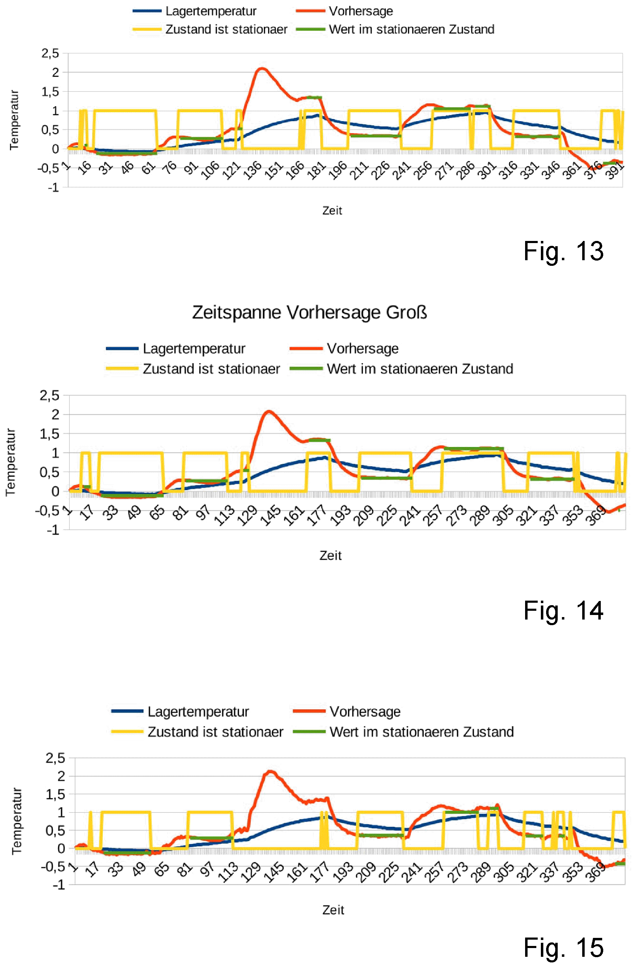

Gemäß Figur 13 bis Figur 21 soll die Energiebezugsgröße für 0,5*τ₀ ruhen, dann 0,5*τ₀ lang auf z. B. 20 % des Nennwerts gesetzt werden, dann 0,5*τ₀ lang auf den doppelten Wert, dann wieder 0,5*τ₀ lang auf z. B. 20 % des Nennwerts, dann erneut 0,5*τ₀ lang auf den doppelten Wert, dann 0,5*τ₀ lang auf z. B. 20 % des Nennwerts gesetzt werden und schließlich 0,5*τ₀ lang im Stillstand belassen werden. Die Messwerte der Sensoren, z. B. die Lagertemperatur und die Umgebungstemperatur, sind wieder aufzuzeichnen und dann so oft wie erforderlich in die Windkraftanlagen-Software einzuspielen. Die von der Windkraftanlagen-Software berechneten Werte, wie z. B. die vorhergesagte Lagertemperaturerhöhung, die Angabe, ob der vorhergesagte Wert dem stationären Zustand entspricht, und die Lagertemperatur im stationären Zustand, können dann beispielsweise mit Hilfe einer Visualisierung in Excel kalibriert werden.

Die Verlängerung der Zeitspanne Δt gemäß Gleichung (51) bei der Berechnung der vorhergesagten Werte führt zu längeren und weniger vorhergesagten Werten (vgl. Figur 14 mit Figur 15). Der Erfinder hat die Zeit auf 3,3min (0,035*τ₀) gesetzt.

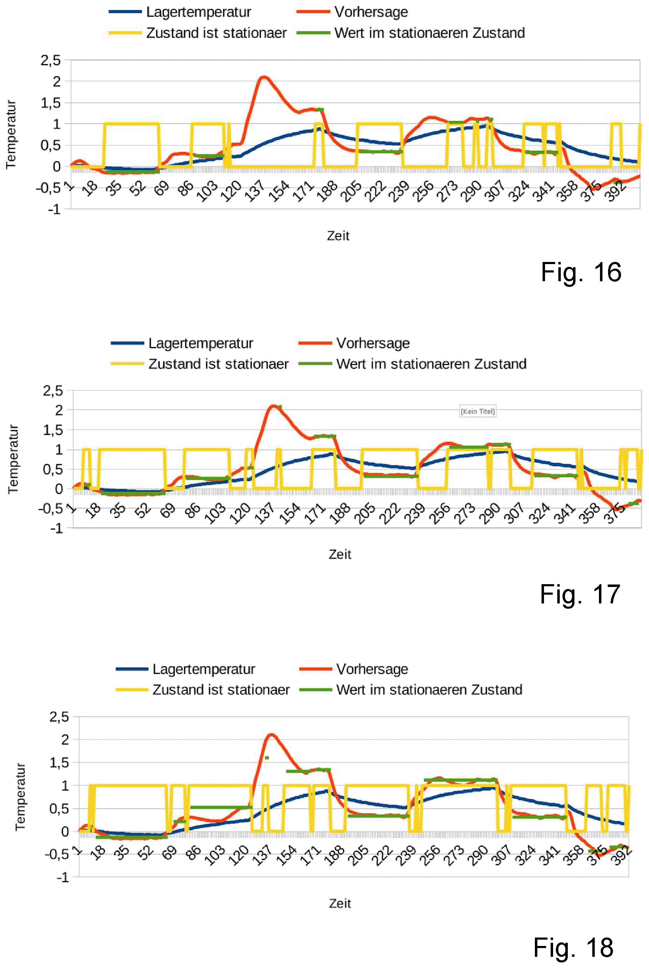

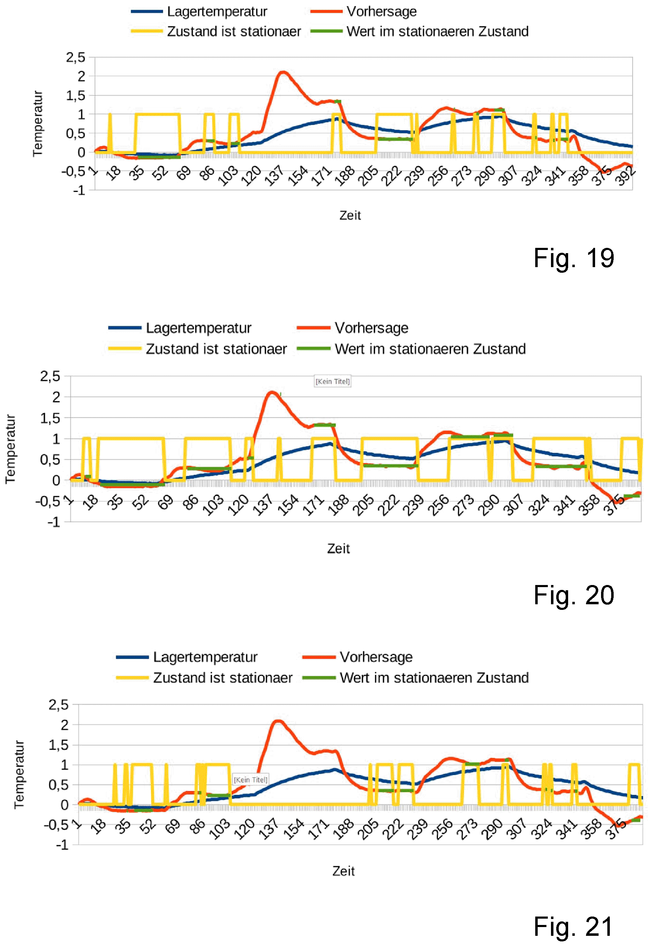

Eine Vergrößerung der Anzahl j der Werte in der Ausgleichsgeraden gemäß Gleichung (58) führt zu kürzeren, genaueren vorhergesagten Werten (Figur 16 und Figur 17). Ebenso führt eine Verringerung des Schwellenwerts der Ausgleichsgeradensteigung m gemäß Gleichung (58) zu kürzeren und genaueren vorhergesagten Werten (Figur 18 und Figur 19). Auch führt eine Verringerung des Schwellenwerts der Varianz 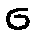 der Ausgleichsgerade gemäß Gleichung (60) zu kürzeren, genaueren vorhergesagten Werten (Figur 20 und Figur 21). Der Erfinder hat die Anzahl j auf 8 gesetzt, entsprechend tⱼ-t₀ = 6,6min = 0,069*τ₀, den Schwellenwert der Ausgleichsgeradensteigung m auf 0,02°C/min (1,6*ΔTₘₐₓ/τ₀) und den Schwellenwert der Varianz 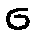 auf 0,02°C (0,017*ΔTₘₐₓ), wobei ΔTₘₐₓ die Lagertemperaturerhöhung bei dem Nennwert der Energiebezugsgröße ist.

### Schwankende Windverhältnisse

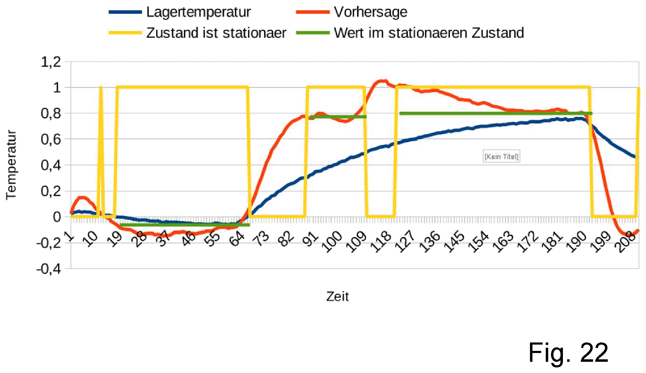

Figur 22 zeigt die Lagertemperaturerhöhung mit dem exponentiellen Verlauf, die vorhergesagte Lagertemperaturerhöhung mit dem polynomischen Verlauf, die Kurve mit binärem Verlauf, die angibt, ob es sich bei der vorhergesagten Lagertemperaturerhöhung um einen stationären Zustand handelt, sowie die Kurve, die den stationären Wert mit horizontalem Verlauf anzeigt. Dabei betrug die Drehzahlschwankung ±15 %. In der Kurve der vorhergesagten Lagertemperaturerhöhung ist ein leicht wellenförmiges Muster zu erkennen. Es ist auch zu erkennen, dass die Kurve, die den Wert im stationären Zustand anzeigt, einen Wert von 0,8 °C annimmt, was ebenfalls dem Wert entspricht, den die Kurve der Lagertemperaturerhöhung im stationären Zustand annehmen würde.

Folglich verhält sich das Messsystem auch unter schwankenden Windbedingungen wie vorgesehen. Das bedeutet, dass entweder die binäre Kurve den Wert "0" annimmt oder die stationäre Kurve die korrekte, gemittelte und vorhergesagte Temperatur anzeigt.

### Anwendungsbeispiel bei Berücksichtigung zweier Größen Q und ΔT

Die Funktion f wird entsprechend der Gleichung (35a) oder (35b) mit INSERT-Statements in einer Datenbank gespeichert und mit SELECT-Statements gelesen (siehe unten). Im Ermittlungszeitraum T_{M}, wenn das Schmiersystem die Vorhersage des stationären Zustandes C als gültig bewertet, trägt es die Energiebezugsgröße Q_{Ref} z. B. 11 und b_{A} =Δ*T*_{Ref} = DT = z. B. 54°C und Mue = (ΔT/Q)_{Ref} = 4,91 mit einem INSERT- Statement in die Datenbank ein:

### INSERT

INTO REIBUNG (Mue,Q,DT)
VALUES (54/11, 11, 54)

| Mue | Q | DT |
|---|---|---|
| ... | ... | ... |
| 4,91 | 11 | 54 |
| ... | ... | ... |

Den im Ermittlungszeitraum T_{M} ermittelten Referenzwert (ΔT/Q)_{Ref} liefert dann das folgende SELECT-Statement, z. B. für die Energiebezugsgröße Q_{Ref} gleich 9,4 und die Temperaturerhöhung ΔT_{Ref}=DTz. B. 43 °C:

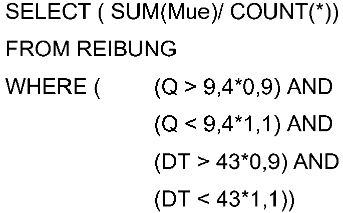

Genauer gesagt, liefert es den arithmetischen Mittelwert von Mue über alle Zeilen, für die gilt: 9,4*0.9 < Q < 9,4*1.1 und 43*0,9 < DT < 43*1,1.

Bekannte Schmiersysteme pumpen in konstanten Zeitabständen aus einem externen Behälter eine feste Menge M_{Ü} des Schmiermittels in die Lager bzw. in die Getriebe. Des Weiteren liegt der Reibungskoeffizient (Roll- und/ oder Gleitreibung) von Kugellagern zwischen 0,0005 und 0,001, variiert also um 100%.

Also wird, sobald das Schmiersystem die Vorhersage des stationären Zustandes C als gültig bewertet und der auf das Ergebnis des SELECT-Satements bezogene Quotient *ΔT*/*Q* des Lagers bzw. Getriebes einen Prozentsatz P_{T} überschreitet, eine Menge M=P_{S}*M_{Ü} in die betroffenen Lager bzw. Getriebe gepumpt, wobei P_{S} ein Bruchteil des Schmiermittels M_{Ü} ist.

Der nach dem Ermittlungszeitraum T_{M} ermittelte, und als gültig bewerteter Quotienten ΔT/Q, wird auf das Ergebnis des SELECT-Statements, also auf den während des Ermittlungszeitraums T_{M} vom Schmiersystem ermittelten Quotienten (ΔT/Q)_{Ref} bezogen.

Überschreitet dieser bezogene Quotient einen Schwellenwert P_{T} so wird eine Schmierung durchgeführt. Bleibt ein Schaden unentdeckt, ist der Schwellenwert P_{T} zu hoch. Wird eine Fehlwarnung ausgelöst, die auf einen Wartungsbedarf hindeutet, ist der Schwellenwert P_{T} zu niedrig. Somit wird als Prozentsatz P_{T} initial ein Wert von vorzugsweise 130% gewählt. Erkennt das Schmiersystem einen Schaden nicht, so ist der Schwellenwert P_{T} um einen Wert von z.B. 5% zu senken. Wird eine Fehlwarnung ausgelöst, die auf einen Wartungsbedarf hindeutet, ist der Schwellenwert zu niedrig und somit um einen Betrag von z. B. 5% zu erhöhen. Iterativ erhält man so den optimalen Schwellenwert P_{T}. Dieser ist dann für alle identischen Windkraftanlagen, d. h. Windkraftanlagen des gleichen Typs, mit gleichem Schmiermittel gültig.

Mithilfe des Schwellenwerts P_{S} lässt sich das Schmierintervall einstellen. Wird eine größere Menge M = MÜ*P_{S} geschmiert, erfolgt die Schmierung in größeren Intervallen. Wird eine kleinere Menge M geschmiert, erfolgt die Schmierung in kürzeren Intervallen. Daher wird als prozentualer Schwellenwert P_{S} zunächst vorzugsweise 25 % gewählt. Wenn der Anlagenbetreiber eine Schmierung in größeren Intervallen wünscht, muss der Schwellenwert P_{S} um beispielsweise 5 % erhöht werden. Wenn eine Schmierung in kürzeren Intervallen gewünscht ist, muss der Schwellenwert P_{S} um beispielsweise 5 % gesenkt werden. Auf diese Weise wird durch Iteration der erforderliche Schwellenwert P_{S} ermittelt, der vorzugsweise so gewählt wird, dass die Schmierintervalle bekannten Schmierintervallen entsprechen. Dies ermöglicht einen Vergleich mit dem Stand der Technik. Sicherheitshalber ist eine zusätzliche Sperrzeit Ts nach jeder Schmierung einzuhalten, vorzugsweise von wenigstens einer halben Stunde und höchstens 24h Dauer. Dadurch wird verhindert, dass das Schmiersystem eine erneute Schmierung durchführt, bevor die erste Schmierstoffmenge im Lager oder Getriebe verteilt ist.

Nach dem Ermittlungszeitraum T_{M}, sobald das Schmiersystem die Vorhersage des stationären Zustandes C als gültig bewertet und die Energiebezugsgröße Q z. B. 9,4 und b_{A} *=ΔT=* DT z. B. 43°C beträgt und das obige SELECT-Statement zum Beispiel 2,5 liefert, beträgt somit der Quotient (43/9,4)/2,5 = 1,8. Also liegt der Wert 80% > 30% über dem Vergleichswert und das Schmiersystem pumpt eine Menge M = M_{Ü}*Pₛ z. B M_{Ü}/4 in das betroffene Lager bzw. Getriebe.

Beträgt dann, sobald das Schmiersystem die Vorhersage des stationären Zustandes C wieder als gültig bewertet, z. B. am nächsten Tag, die Energiebezugsgröße Q, z. B. 24 und b_{A} *=ΔT=* DT z. B. 67°C und liefert das unten angegebene SELECT-Statement zum Beispiel 2,7 so beträgt der Quotient (67/24)/2,7 = 1,034. Also liegt der Wert um weniger als 30%, nämlich 3,4%, über dem Vergleichswert und es erfolgt keine weitere Schmierung:

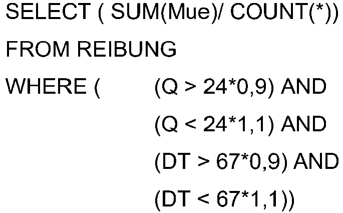

Tritt in einem Lager oder ein Getriebe ein Schaden auf, wird kontinuierlich Schmiermittel zugeführt, wodurch sich der Vorratsbehälter entleert. Wenn sich der Vorratsbehälter entleert, können beispielsweise abgelöste Partikel in dem Lager oder Getriebe sein, was zu deren Zerstörung führen kann. Ist der Behälter so ausgelegt, dass er zu jedem planungsmäßigen Wartungsintervall noch zu 50 % gefüllt ist, so ist sicher, dass bei einem Füllstand von nur 20 % im Vorratsbehälter ein Schaden vorliegt. Somit besteht ein Handlungsbedarf und das Schmiersystem zeigt durch ein Signal die Notwendigkeit der Wartung der Windkraftanlage an. Folglich wird ein Schaden im Lager oder Getriebe frühzeitig erkannt und kann mit relativ geringem Aufwand behoben werden.

Falls die Windkraftanlage über einen gewissen Zeitraum nicht wartbar und der externe Vorratsbehälter leer ist, pumpt das Schmiersystem jeden Tag eine Menge M, z. B. M_{Ü}*P_{S}/4, des Schmiermittels - über einen Filter gereinigt - aus dem externen Auffangbehälter in das Lager bzw. Getriebe, bis z.B. die Partikel ausgeschwemmt sind oder eine Wartung erfolgte.

### Systemverhalten bei schwankenden Windverhältnissen

Der Abschnitt "Schwankende Windverhältnisse" zeigt, dass das Messsystem die Lagertemperaturerhöhung auch unter schwankenden Windverhältnissen korrekt berechnet. Wenn Sie die Funktion f gemäß Gleichung (35a) oder (35b) z. B. wie im Abschnitt "Anwendungsbeispiel bei Berücksichtigung zweier Größen Q und ΔT" angegeben speichern, speichert die INSERT-Anweisung schwankende Werte ΔT/Q = Mue zusammen mit der Energiebezugsgröße Q und Temperaturerhöhung ΔT in der Datenbank. Wenn Sie nun die Größe ΔT/Q = Mue mit der SELECT-Anweisung wie angegeben, aus der Datenbank lesen, erhalten Sie korrekte Mittelwerte für die Größe ΔT/Q = Mue.

## Patentansprüche

1. Verfahren zum Betreiben eines Schmiersystems für ein Lager einer Windkraftanlage oder für ein Getriebe einer Windkraftanlage, umfassen die Schritte
- Ermitteln einer Temperatur T des Lagers oder des Getriebes,
- Ermitteln einer Umgebungstemperatur T_{U},
- Ermitteln einer Drehzahl n des Lagers oder Ermitteln einer übertragenen Leistung P des Getriebes,
- Bilden eines Quotienten ΔT/Q mit Q = n oder Q = P und mit ΔT = T - T_{U},
- Zuführen eines Schmiermittels aus einem Vorratsspeicher in das Lager oder in das Getriebe in Abhängigkeit von dem ermittelten Quotienten ΔT/Q.

2. Verfahren nach Patentanspruch 1,
wobei verbrauchtes Schmiermittel aus dem Lager oder Getriebe in einem Auffangbehälter gesammelt wird.

3. Verfahren nach Patentanspruch 1 oder 2,
wobei das Lager oder das Getriebe über eine bestimmte Einlaufzeit betrieben wird und das Ermitteln einer Temperatur T_{Ref} des Lagers oder des Getriebes, das Ermitteln einer Umgebungstemperatur T_{URef}, und das Ermitteln einer Drehzahl n_{Ref} des Lagers oder das Ermitteln einer übertragenen Leistung P_{Ref} des Getriebes, als Referenzgrößen in einem bestimmten Ermittlungszeitraum T_{M}, nach der Einlaufzeit erfolgt.

4. Verfahren nach Patentanspruch 3,
wobei das Ermitteln der Größen Temperatur T des Lagers oder des Getriebes, Umgebungstemperatur T_{U}, Drehzahl n des Lagers oder übertragene Leistung P des Getriebes nach dem Ermittlungszeitraum erfolgt,
und wobei das Zuführen eines Schmiermittels aus einem Vorratsspeicher in das Lager oder in das Getriebe in Abhängigkeit von einem Vergleich der aus den nach dem Ermittlungszeitraum ermittelten Größen gebildeten Quotienten ΔT/Q mit dem aus den im Ermittlungszeitraum ermittelten Referenzgrößen gebildeten Referenzwert (ΔT/Q)_{Ref} erfolgt.

5. Verfahren nach Patentanspruch 3 oder 4,
wobei die Einlaufzeit wenigstens einen Monat und höchstens sechs Monate ab Inbetriebnahme des Lagers oder des Getriebes beträgt.

6. Verfahren nach einem der vorstehenden Patentansprüche,
wobei eine Notwendigkeit einer Wartung des Lagers oder des Getriebes angezeigt wird, sobald der Füllstand des Vorratsspeichers unter einen bestimmten Anteil P_{V} des Schmiermittels in dem Vorratsspeicher sinkt.

7. Verfahren nach Patentanspruch 6,
wobei der Füllstand unter einen Anteil P_{V} in einem Bereich von 6% bis 35% des Volumens des Vorratsspeichers sinkt.

8. Verfahren nach einem der vorstehenden Patentansprüche,
wobei die Notwendigkeit einer Wartung des Lagers oder des Getriebes angezeigt wird, wenn der Füllstand des Schmiermittels in dem Vorratsbehälter schneller sinkt als durch einen Verbrauchserwartungswert vorgegeben ist.

9. Verfahren nach einem der Patentansprüche 2 bis 8,
wobei wenigstens eine Teilmenge des Schmiermittels aus dem Auffangbehälter über einen Filter gereinigt und in das Lager bzw. Getriebe gepumpt wird, wenn das Lager bzw. Getriebe über einen bestimmten Zeitraum nicht gewartet wurde und/oder der Vorratsbehälter einen bestimmten Mindestfüllstand unterschreitet oder leer ist.

10. Schmiersystem für ein Lager einer Windkraftanlage oder für ein Getriebe einer Windkraftanlage,
wobei das Schmiersystem Sensoren aufweist, die eingerichtet sind,
- eine Temperatur T des Lagers oder des Getriebes,
- eine Umgebungstemperatur T_{U},
- eine Drehzahl n des Lagers und/oder
- eine übertragene Leistung P des Getriebes zu ermitteln
wobei das Schmiersystem einen Vorratsspeicher für das Schmiermittel aufweist und eingerichtet ist,
- einen Quotienten ΔT/Q mit Q = n oder Q = P und mit ΔT = T - T_{U}, oder ΔT/P mit ΔT = T - T_{U} zu bilden,
- und ein Schmiermittel in Abhängigkeit von dem ermittelten Quotienten ΔT/Q aus dem Vorratsspeicher in das Lager oder in das Getriebe zu pumpen.

11. Schmiersystem nach Patentanspruch 10,
wobei das Schmiersystem einen Auffangbehälter für verbrauchtes Schmiermittel aufweist.

12. Schmiersystem nach Patentanspruch 10 oder 11,
wobei das Schmiersystem einen Datenspeicher aufweist und eingerichtet ist, nach einer Einlaufzeit in einem Ermittlungszeitraum T_{M} ermittelte Referenzgrößen Temperatur T_{Ref}, Umgebungstemperatur T_{URef}, Drehzahl n_{Ref} oder Leistung P_{Ref} und/oder einen daraus gebildeten Referenzwert (ΔT/Q)_{Ref} zu speichern.

13. Schmiersystem nach einem der Patentansprüche 10 bis 12,
wobei das Schmiersystem eingerichtet ist die Notwendigkeit einer Wartung des Lagers oder des Getriebes anzuzeigen,
a) sobald sich nur noch ein bestimmter Anteil P_{V} des Schmiermittels in dem Vorratsspeicher befindet und/oder
b) wenn der Füllstand des Schmiermittels in dem Vorratsbehälter schneller sinkt als durch einen Verbrauchserwartungswert vorgegeben ist.

14. Windkraftanlage mit einem Schmiersystem nach einem der Ansprüche 10 bis 13.

15. Windkraftanlagenanordnung mit wenigstens zwei Windkraftanlagen nach Patentanspruch 14,
wobei die wenigstens zwei Windkraftanlagen eingerichtet sind, der Gestalt miteinander zu kommunizieren, dass sie die jeweils ermittelten Quotienten ΔT/Q austauschen.
